(19) **Europäisches Patentamt / European Patent Office / Office européen des brevets**

(11) **EP 4 663 800 A1**

(12) **EUROPEAN PATENT APPLICATION**
published in accordance with Art. 153(4) EPC

(43) Date of publication:
**17.12.2025 Bulletin 2025/51**

(21) Application number: **24778945.6**

(22) Date of filing: **27.02.2024**

(51) International Patent Classification (IPC):
*C22C 38/00* (2006.01)   *C21D 9/46* (2006.01)
*C21D 9/56* (2006.01)   *C22C 38/06* (2006.01)
*C22C 38/60* (2006.01)

(52) Cooperative Patent Classification (CPC):
**C21D 9/46; C21D 9/56; C22C 38/00; C22C 38/06; C22C 38/60**

(86) International application number:
**PCT/JP2024/006906**

(87) International publication number:
**WO 2024/202803 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023058451**

(71) Applicant: JFE Steel Corporation
**Tokyo 100-0011 (JP)**

(72) Inventors:
• WANG, Fangyi
  **Tokyo 100-0011 (JP)**
• YAMAGISHI, Daiki
  **Tokyo 100-0011 (JP)**
• KAWASAKI, Yoshiyasu
  **Tokyo 100-0011 (JP)**
• NAKAGAITO, Tatsuya
  **Tokyo 100-0011 (JP)**

(74) Representative: **Hoffmann Eitle Patent- und Rechtsanwälte PartmbB Arabellastraße 30 81925 München (DE)**

(54) **STEEL SHEET, MEMBER, AND METHOD FOR MANUFACTURING SAME**

(57)   A steel sheet and a member with a TS of 1180 MPa or more and less than 1470 MPa, a high YS, a high YR, high press formability (bendability and ductility of the steel sheet), and good energy absorption characteristics, and methods for producing the steel sheet and the member are provided.

A base steel sheet has a predetermined chemical composition, a surface soft layer of 20 $\mu$m or more is provided on a surface layer of the base steel sheet, ferrite, retained austenite, fresh martensite, bainitic ferrite, and tempered martensite are set to predetermined ranges in a steel microstructure at a quarter thickness position of the base steel sheet, and $L_{F\text{-}MA}/L_F$ is 0.70 or less.

**EP 4 663 800 A1**

# FIG. 1

(a)

(b)

**Description**

Technical Field

The present invention relates to a steel sheet, a member made of the steel sheet, and methods for producing the steel sheet and the member.

Background Art

From the viewpoint of global environmental conservation, improvement of fuel efficiency in automobiles has been an important issue. Thus, there has been an active movement to reduce the weight of automobile bodies by increasing the strength and reducing the thickness of steel sheets used as materials for automotive body components.

Furthermore, a social demand for improvement of crash safety of automobiles is further increased. Thus, there is a demand for the development of a steel sheet with high strength and good anti-crash properties when a vehicle collides in the course of travel (hereinafter referred to simply as an anti-crash properties).

As a steel sheet serving as a material for such an automotive body component, for example, Patent Literature 1 discloses a high-strength hot-dip galvanized steel sheet with a high TS-El balance, high stretch flangeability, a low YR, and high workability, which has a chemical composition containing, on a mass percent basis, C: 0.05% to 0.3%, Si: 0.01% to 2.5%, Mn: 0.5% to 3.5%, P: 0.003% to 0.100%, S: 0.02% or less, Al: 0.010% to 1.5%, and N: 0.007% or less, with the remainder being Fe and incidental impurities, and has a microstructure containing, in terms of area fraction, 20% to 87% ferrite, a total of 3% to 10% martensite and retained austenite, and 10% to 60% tempered martensite.

Patent Literature 2 discloses a high-strength hot-dip galvanized steel sheet with a coated layer on a surface of the steel sheet and with a thickness in the range of 0.6 to 5.0 mm, characterized in that the microstructure of the steel sheet includes 40% to 90% of a ferrite phase and 3% to 25% of a retained austenite phase in terms of volume fraction, the retained austenite phase has a solid-solution carbon content in the range of 0.70% to 1.00%, an average grain size of 2.0 $\mu$m or less, and an average distance between grains in the range of 0.1 to 5.0 $\mu$m, a decarburized layer in a surface layer portion of the steel sheet has a thickness in the range of 0.01 to 10.0 $\mu$m, an oxide contained in the surface layer portion of the steel sheet has an average particle size in the range of 30 to 120 nm, the average density is $1.0 \times 10^{12}$ /m$^2$ or more, and the work hardening coefficient (n-value) at the time of plastic deformation in the range of 3% to 7% is 0.080 or more on average, and the steel sheet has high ductility while maintaining high strength with a maximum tensile strength of 900 MPa or more and has good mechanical cutting characteristics.

Patent Literature 3 discloses a high-strength hot-dip galvanized steel sheet with high delayed fracture resistance, characterized in that the steel sheet includes 40% to 90% of a ferrite phase and 5% or less of a retained austenite phase in terms of volume fraction, the proportion of unrecrystallized ferrite in the entire ferrite phase is 50% or less, the grain size ratio, which is a value obtained by dividing the average grain size of crystal grains of the ferrite phase in a rolling direction by the average grain size in a sheet width direction, ranges from 0.75 to 1.33, the length ratio, which is a value obtained by dividing the average length in the rolling direction of hard microstructures dispersed in an island shape by the average length in the sheet width direction, ranges from 0.75 to 1.33, and the average aspect ratio of inclusions is 5.0 or less.

Citation List

Patent Literature

    PTL 1: Japanese Patent No. 5256689
    PTL 2: Japanese Patent No. 5354135
    PTL 3: Japanese Patent No. 5352793

Summary of Invention

Technical Problem

In recent years, application of a steel sheet with a tensile strength (hereinafter also referred to as TS) of 780 MPa grade or more to an impact energy absorbing member of an automobile exemplified by a front side member or a rear side member has been put to practical use.

Thus, to increase absorbed energy at the time of impact (hereinafter also referred to as impact absorbed energy), it is effective to improve yield stress (hereinafter also referred to as YS). However, an increase in the TS and YS of a steel sheet generally decreases press formability, particularly, ductility, flangeability, bendability, and other characteristics. Thus, when it is assumed that such a steel sheet with increased TS and YS is applied to the above-described impact energy absorbing member of an automobile, the steel sheet is difficult to press and has a low yield due to variations at the time of forming. In particular, a decrease in the press formability of an end portion of a steel sheet results in the occurrence of edge cracking of an actual member.

Although Patent Literature 1 discloses a high-strength hot-dip galvanized steel sheet in which both ductility, which is the press formability of the inside of the steel sheet, and stretch flangeability, which is the press formability of an end portion of the steel sheet, are improved, it cannot be said that bendability and energy absorption characteristics are sufficient.

Although Patent Literature 2 discloses a high-strength hot-dip galvanized steel sheet in which ductility is improved by the formation of retained austenite inside the steel sheet and mechanical cutting characteristics are improved by the formation of a decarburized layer in a surface layer of the steel sheet, it cannot be said that bendability and energy absorption characteristics are sufficient.

Although Patent Literature 3 discloses a high-strength hot-dip galvanized steel sheet in which ductility is improved by forming soft ferrite as a main microstructure inside the steel sheet and by limiting the amount of unrecrystallized ferrite to a small amount, and delayed fracture resistance and anisotropy thereof are improved by forming a decarburized layer in a surface layer of the steel sheet, it cannot be said that bendability and energy absorption characteristics are sufficient.

Thus, it cannot be said that the steel sheets disclosed in Patent Literature 1 to Patent Literature 3 have a TS of 1180 MPa or more, a high YS, a high yield ratio YR, high press formability (bendability and ductility of the steel sheet), and good energy absorption characteristics.

The present invention has been made in view of the above problems and aims to provide a steel sheet with a tensile strength TS of 1180 MPa or more and less than 1470 MPa, a high yield stress YS, a high yield ratio YR, high press formability (bendability and ductility of the steel sheet), and good energy absorption characteristics, together with an advantageous method for producing the steel sheet.

The present invention also aims to provide a member using the steel sheet as a material, and a method for producing the member.

The steel sheet mentioned here also includes a galvanized steel sheet, and the galvanized steel sheet is a hot-dip galvanized steel sheet (hereinafter also referred to as GI), a hot-dip galvannealed steel sheet (hereinafter also referred to as GA), or an electrogalvanized steel sheet (hereinafter also referred to as EG).

The tensile strength TS is measured in a tensile test according to JIS Z 2241 (2011).

The phrases "high yield stress YS", "high yield ratio YR", "high press formability (bendability and ductility of the steel sheet)", and "good energy absorption characteristics" mean satisfying the following.

The phrase "high yield stress YS" means that YS measured in the tensile test according to JIS Z 2241 (2011) satisfies the following formula (A) or (B) depending on TS measured in the tensile test.

(A) For 1180 MPa $\leq$ TS < 1320 MPa, 750 MPa $\leq$ YS
(B) For 1320 MPa $\leq$ TS, 850 MPa $\leq$ YS

The phrase "high yield ratio YR" means that YR calculated based on yield stress YS and tensile strength TS measured in the tensile test according to JIS Z 2241 (2011) is 0.70 or more.

The phrase "high bendability" refers to a bending angle ($\alpha$) of 80 degrees or more at the maximum load measured in a bending test according to VDA standard (VDA 238-100) defined by the German Association of the Automotive Industry.

The phrase "high ductility (high stretch formability inside a steel sheet)" means that the total elongation (El) measured in the tensile test according to JIS Z 2241 (2011) satisfies the following formula (A) or (B) depending on TS measured in the tensile test.

(A) For 1180 MPa $\leq$ TS < 1320 MPa, 11.0% $\leq$ El
(B) For 1320 MPa $\leq$ TS, 9.0% $\leq$ El

The phrase "good energy absorption characteristics" means that, in addition to high YS, the integral value AE of a load-stroke curve at the maximum load measured in the bending test according to the VDA standard (VDA 238-100) defined by the German Association of the Automotive Industry is 70000 N·mm or more.

Solution to Problem

To achieve the above objects, the present inventors have conducted extensive studies.

As a result, the chemical composition of a base steel sheet of a steel sheet was appropriately adjusted, and the steel sheet had a surface soft layer with a thickness of 20 $\mu$m or more from a surface of the base steel sheet in a sheet thickness direction when a region in which the total area fraction of a non-ferrite microstructure was $S_A/2$ or less ($S_A$: total area fraction of a non-ferrite microstructure at a quarter thickness position) was defined as the surface soft layer, and had a steel microstructure of the area fraction of ferrite: less than 20.0% (including 0.0%), the volume fraction of retained austenite: 3.0% or more and 15.0% or less, the area fraction of fresh martensite: 10.0% or less (including 0.0%), and the total area fraction of bainitic ferrite and tempered martensite (excluding retained austenite): 45.0% or more and 90.0% or less at a quarter thickness position of the base steel sheet, and the grain boundary length $L_{F-MA}$ in contact with an MA microstructure (fresh martensite and/or retained austenite) on a ferrite grain boundary and the grain boundary length $L_F$ of ferrite satisfied $L_{F-MA}/L_F$: 0.70 or less. As a result, it was found that a steel sheet with a TS of 1180 MPa or more and less than 1470 MPa, a high YS, a high YR, high press formability (bendability and ductility of the steel sheet), and good energy absorption characteristics can be produced.

The present invention has been completed on the basis of the above findings and further studies.

The following is the gist of the present invention.

[1] A steel sheet including a base steel sheet, wherein the base steel sheet has a chemical composition containing, on a mass percent basis,

C: 0.050% or more and 0.400% or less,
Si: 0.20% or more and 3.00% or less,
Mn: 1.00% or more and less than 3.50%,
P: 0.001% or more and 0.100% or less,
S: 0.0001% or more and 0.0200% or less,
Al: 0.010% or more and 2.000% or less, and
N: 0.0100% or less,
with the remainder being Fe and incidental impurities, and
has a steel microstructure, as a microstructure at a quarter thickness position of the base steel sheet, in which
an area fraction of ferrite: less than 20.0% (including 0.0%),
an area fraction of retained austenite: 3.0% or more and 15.0% or less,
an area fraction of fresh martensite: 10.0% or less (including 0.0%),
a total area fraction of bainitic ferrite and tempered martensite: 45.0% or more and 90.0% or less, and
a grain boundary length $L_{F-MA}$ in contact with fresh martensite and/or retained austenite on a ferrite grain boundary and a grain boundary length $L_F$ of ferrite satisfy $L_{F-MA}/L_F$: 0.70 or less,
the steel sheet has a surface soft layer formed from a surface of the base steel sheet to a depth of 20 $\mu$m or more in a thickness direction, wherein for the steel microstructure, a total area fraction of a non-ferrite microstructure in the surface soft layer is 1/2 or less of that at the quarter thickness position, and
the steel sheet has a tensile strength of 1180 MPa or more and less than 1470 MPa.

[2] The steel sheet according to [1], wherein the chemical composition further contains, on a mass percent basis,

at least one selected from
Nb: 0.200% or less,
Ti: 0.200% or less,
V: 0.200% or less,
B: 0.0100% or less,
Cr: 1.000% or less,
Ni: 1.000% or less,
Mo: 1.000% or less,
Sb: 0.200% or less,
Sn: 0.200% or less,
Cu: 1.000% or less,
Ta: 0.100% or less,
W: 0.500% or less,
Mg: 0.0200% or less,
Zn: 0.0200% or less,
Co: 0.0200% or less,
Zr: 0.1000% or less,
Ca: 0.0200% or less,

Se: 0.0200% or less,
Te: 0.0200% or less,
Ge: 0.0200% or less,
As: 0.0500% or less,
Sr: 0.0200% or less,
Cs: 0.0200% or less,
Hf: 0.0200% or less,
Pb: 0.0200% or less,
Bi: 0.0200% or less, and
REM: 0.0200% or less.

[3] The steel sheet according to [1] or [2], including a galvanized layer on one or both surfaces of the base steel sheet.

[4] A member produced by using the steel sheet according to any one of [1] to [3].

[5] A method for producing a steel sheet, the method including:

a hot rolling step of hot-rolling a steel slab with the chemical composition according to [1] or [2] to form a hot-rolled steel sheet;

a pickling step of pickling the hot-rolled steel sheet;

an annealing step of heating the steel sheet after the pickling step and annealing the steel sheet under conditions of an annealing temperature of 720°C or more and 860°C or less, a holding time of 20 seconds or more, and an atmosphere with a dew-point temperature of -10°C or more;

a rapid heating step of rapidly heating the steel sheet from the annealing temperature to the annealing temperature + 10°C or more at a heating rate of 10°C/s or more;

a cooling step of cooling the steel sheet after the rapid heating step to a cooling stop temperature of 100°C or more and 300°C or less; and

a reheating and holding step of heating the steel sheet after the cooling step to a tempering temperature of 460°C or less and holding the steel sheet in the temperature range for a tempering time of 10 seconds or more and 2000 seconds or less,

or further including

a cold rolling step of cold-rolling the steel sheet after the pickling step and before the annealing step at a rolling reduction of 20% or more and 80% or less to form a cold-rolled steel sheet.

[6] The method for producing a steel sheet according to [5], wherein a line speed LS (m/min) of the steel sheet in the annealing step satisfies the following formula (1):

$$3.0/(t \times W \times 4.716 \times 10^{-4}) < LS < 390.0/(t \times W \times 4.716 \times 10^{-4}) \qquad \text{formula (1)}$$

wherein

t denotes a sheet thickness (mm) after the pickling step and before the annealing step, and
W denotes a sheet width (mm) after the pickling step and before the annealing step.

[7] The method for producing a steel sheet according to [5] or [6], the method including, during the cooling step, after the cooling step and before the reheating and holding step, or after the reheating and holding step, a hot-dip galvanizing step of immersing the steel sheet in a hot-dip galvanizing bath to form a galvanized layer on the steel sheet,

or further comprising an alloying treatment step of performing an alloying treatment on the steel sheet on which the galvanized layer is formed.

[8] The method for producing a steel sheet according to [5] or [6], the method including, after the reheating and holding step, an electrogalvanizing step of immersing the steel sheet in an electrogalvanizing bath to form a galvanized layer on the steel sheet.

[9] A method for producing a member, including a step of subjecting the steel sheet according to any one of [1] to [3] to at least one of forming or joining to produce a member.

Advantageous Effects of Invention

The present invention can provide a steel sheet with a tensile strength TS of 1180 MPa or more and less than 1470 MPa, a high yield stress YS, a high yield ratio YR, high press formability (bendability and ductility of the steel sheet), and

good energy absorption characteristics.

Furthermore, a member using a steel sheet according to the present invention as a material has high strength, a high yield stress YS, a high yield ratio YR, high press formability (bendability and ductility of the steel sheet), and good energy absorption characteristics and can be extremely advantageously applied to an impact energy absorbing member of an automobile or the like.

Brief Description of Drawings

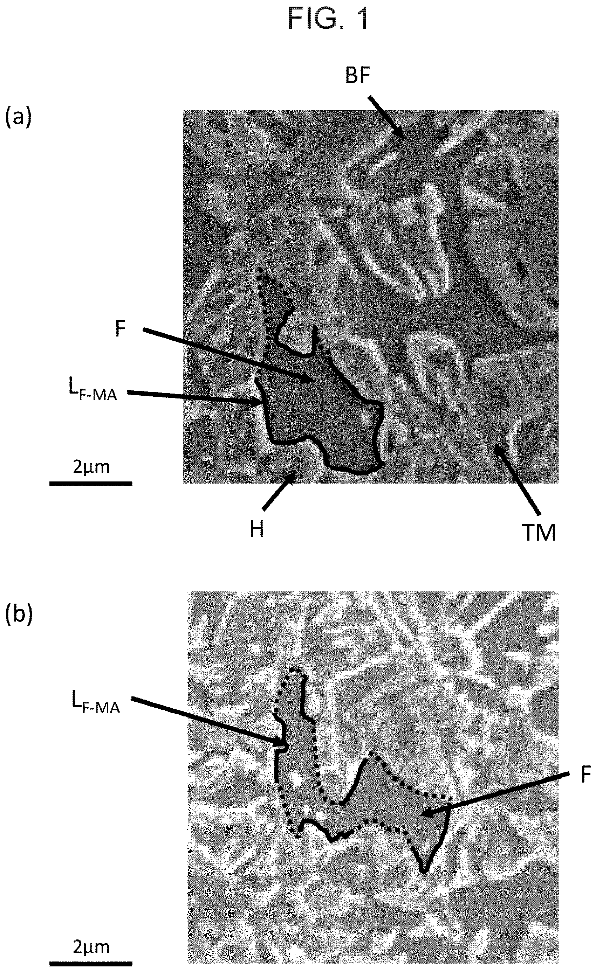

[Fig. 1] Fig. 1 is an example of a SEM microstructure image used for identification of a microstructure, wherein (a) is a microstructure image of Comparative Example No. 19, and (b) is a microstructure image of Inventive Example No. 1.

Description of Embodiments

The present invention will be described based on the following embodiments.

[1. Steel Sheet]

A steel sheet according to the present invention is a steel sheet including a base steel sheet, wherein the base steel sheet has a chemical composition containing, on a mass percent basis, C: 0.050% or more and 0.400% or less, Si: 0.20% or more and 3.00% or less, Mn: 1.00% or more and less than 3.50%, P: 0.001% or more and 0.100% or less, S: 0.0001% or more and 0.0200% or less, Al: 0.010% or more and 2.000% or less, and N: 0.0100% or less, with the remainder being Fe and incidental impurities, and has a steel microstructure, as a microstructure at a quarter thickness position of the base steel sheet, in which an area fraction of ferrite: less than 20.0% (including 0.0%), an area fraction of retained austenite: 3.0% or more and 15.0% or less, an area fraction of fresh martensite: 10.0% or less (including 0.0%), a total area fraction of bainitic ferrite and tempered martensite: 45.0% or more and 90.0% or less, and a grain boundary length $L_{F-MA}$ in contact with MA microstructure (fresh martensite and/or retained austenite) on a ferrite grain boundary and a grain boundary length $L_F$ of ferrite satisfy $L_{F-MA}/L_F$: 0.70 or less, the steel sheet has a surface soft layer formed from a surface of the base steel sheet to a depth of 20 $\mu$m or more in a thickness direction, wherein for the steel microstructure, a total area fraction of a non-ferrite microstructure in the surface soft layer is 1/2 or less of that at the quarter thickness position, and the steel sheet has a tensile strength of 1180 MPa or more and less than 1470 MPa.

A steel sheet according to the present invention has a tensile strength TS (the tensile strength TS is hereinafter also referred to simply as TS) of 1180 MPa or more and less than 1470 MPa, a high yield stress YS (the yield stress YS is hereinafter also referred to simply as YS), a high yield ratio YR (the yield ratio YR is hereinafter also referred to simply as YR), high press formability (bendability and ductility of the steel sheet), and good energy absorption characteristics.

The steel sheet may have a galvanized layer as an outermost surface layer on one or both surfaces of the steel sheet. A steel sheet with a galvanized layer may be a galvanized steel sheet.

More specifically, a steel sheet with a hot-dip galvanized layer among galvanized layers may be a hot-dip galvanized steel sheet.

A steel sheet with a hot-dip galvannealed layer among the galvanized layers may be a hot-dip galvannealed steel sheet.

A steel sheet with an electrogalvanized layer among the galvanized layers may be an electrogalvanized steel sheet.

Chemical Composition

First, the chemical composition of a base steel sheet of a steel sheet according to an embodiment of the present invention will be described. Although the unit in the chemical composition is "% by mass" in all cases, the unit is hereinafter simply indicated by "%" unless otherwise specified.

C: 0.050% or more and 0.400% or less

C is an element effective in forming appropriate amounts of fresh martensite, tempered martensite, bainitic ferrite, and retained austenite and ensuring a tensile strength TS of 1180 MPa or more and less than 1470 MPa and a high YS. A C content of less than 0.050% results in an increase in the area fraction of ferrite and makes it difficult to achieve a TS of 1180 MPa or more. This also results in a decrease in YS.

On the other hand, a C content of more than 0.400% results in an excessive increase in the area fraction of fresh martensite and makes it difficult to achieve a TS of less than 1470 MPa. Furthermore, an increase in fresh martensite may result in introduction of a mobile dislocation into ferrite or bainitic ferrite and a decrease in YR. Furthermore, fresh martensite may become a starting point of void formation in a VDA bending test, and the steel sheet may not have desired bendability.

Thus, the C content is 0.050% or more and 0.400% or less. The C content is preferably 0.100% or more. The C content is preferably 0.300% or less.

Si: 0.20% or more and 3.00% or less

Si suppresses the formation of carbide and promotes the formation of retained austenite during cooling and holding after annealing. Thus, Si is an element that affects the area fraction of retained austenite. A Si content of less than 0.20% results in a decrease in the area fraction of retained austenite and a decrease in ductility.

On the other hand, a Si content of more than 3.00% may result in a decrease in YS due to an excessive increase in the area fraction of ferrite. This also results in a decrease in YR.

Thus, the Si content is 0.20% or more and 3.00% or less. The Si content is preferably 2.00% or less. The Si content is preferably 0.50% or more.

Mn: 1.00% or more and less than 3.50%

Mn is an element that adjusts the area fraction of bainitic ferrite, tempered martensite, or the like. A Mn content of less than 1.00% results in an excessive increase in the area fraction of ferrite and makes it difficult to achieve a TS of 1180 MPa or more. This also results in a decrease in YS.

On the other hand, a Mn content of 3.50% or more results in a decrease in martensite start temperature Ms (hereinafter also referred to simply as an Ms temperature or Ms) and a decrease in martensite formed in a cooling step. This increases martensite formed during final cooling, does not sufficiently temper martensite formed at that time, and increases the area fraction of hard fresh martensite. Furthermore, an increase in fresh martensite may result in introduction of a mobile dislocation into ferrite or bainitic ferrite and a decrease in YS. This also results in a decrease in YR. Furthermore, fresh martensite may become a starting point of void formation in a VDA bending test, and the steel sheet may not have desired bendability.

Thus, the Mn content is 1.00% or more and less than 3.50%. The Mn content is preferably 2.00% or more. The Mn content is preferably 3.00% or less.

P: 0.001% or more and 0.100% or less

P is an element that has a solid-solution strengthening effect and increases TS and YS of a steel sheet. To produce such an effect, the P content is 0.001% or more.

On the other hand, when the P content is more than 0.100%, P segregates at a prior-austenite grain boundary and embrittles the grain boundary. This may result in an increase in the number of voids formed in a VDA bending test, and desired bendability may not be achieved.

Thus, the P content is 0.001% or more and 0.100% or less. The P content is preferably 0.030% or less.

S: 0.0001% or more and 0.0200% or less

S is present as a sulfide in steel. In particular, a S content of more than 0.0200% may result in an increase in the number of voids formed in a VDA bending test, and desired bendability may not be achieved.

Thus, the S content is 0.0200% or less. The S content is preferably 0.0080% or less, more preferably 0.0040% or less.

Due to constraints on production technology, the S content is 0.0001% or more, preferably 0.0003% or more.

Al: 0.010% or more and 2.000% or less

Al suppresses the formation of carbide and promotes the formation of retained austenite during cooling and holding after annealing. Thus, Al is an element that affects the volume fraction of retained austenite. To produce such effects, the Al content is 0.010% or more.

On the other hand, an Al content of more than 2.000% results in an excessive increase in the area fraction of ferrite and makes it difficult to achieve a TS of 1180 MPa or more. This also results in a decrease in YS.

Thus, the Al content is 0.010% or more and 2.000% or less. The Al content is preferably 0.015% or more. The Al content is preferably 1.000% or less, more preferably 0.100% or less.

N: 0.0100% or less

N is present as a nitride in steel. In particular, a N content of more than 0.0100% may result in an increase in the number of voids formed in a VDA bending test, and desired bendability may not be achieved.

Thus, the N content is 0.0100% or less. The N content is preferably 0.0050% or less.

The N content may have any lower limit but is preferably 0.0005% or more, more preferably 0.0010% or more, due to constraints on production technology.

A base chemical composition of a base steel sheet of a steel sheet according to an embodiment of the present invention has been described above, and a base steel sheet of a steel sheet according to an embodiment of the present invention has a chemical composition that contains the base components and the remainder other than the base components including Fe (iron) and incidental impurities. A base steel sheet of a steel sheet according to an embodiment of the present invention preferably has a chemical composition that contains the base components and the remainder composed of Fe and incidental impurities.

A base steel sheet of a steel sheet according to an embodiment of the present invention may contain at least one selected from the following optional components in addition to the base components. The advantages of the present invention can be achieved as long as the following optional components are contained in an amount equal to or lower than the upper limit amount described below, and the lower limit is not particularly defined. These optional elements, when contained below the appropriate lower limits described later, are contained as incidental impurities.

At least one selected from Nb: 0.200% or less, Ti: 0.200% or less, V: 0.200% or less, B: 0.0100% or less, Cr: 1.000% or less, Ni: 1.000% or less, Mo: 1.000% or less, Sb: 0.200% or less, Sn: 0.200% or less, Cu: 1.000% or less, Ta: 0.100% or less, W: 0.500% or less, Mg: 0.0200% or less, Zn: 0.0200% or less, Co: 0.0200% or less, Zr: 0.1000% or less, Ca: 0.0200% or less, Se: 0.0200% or less, Te: 0.0200% or less, Ge: 0.0200% or less, As: 0.0500% or less, Sr: 0.0200% or less, Cs: 0.0200% or less, Hf: 0.0200% or less, Pb: 0.0200% or less, Bi: 0.0200% or less, and REM: 0.0200% or less

Nb: 0.200% or less

Nb increases TS and YS by forming fine carbide, nitride, or carbonitride during hot rolling or annealing. To produce such an effect, the Nb content is preferably 0.001% or more. The Nb content is more preferably 0.005% or more.

On the other hand, a Nb content of more than 0.200% may result in a large number of coarse precipitates or inclusions. Such a case may result in an increase in the number of voids formed in a VDA bending test, and desired bendability may not be achieved. Thus, when Nb is contained, the Nb content is preferably 0.200% or less. The Nb content is more preferably 0.060% or less.

Ti: 0.200% or less

Like Nb, Ti increases TS and YS by forming fine carbide, nitride, or carbonitride during hot rolling or annealing. To produce such an effect, the Ti content is preferably 0.001% or more. The Ti content is more preferably 0.005% or more.

On the other hand, a Ti content of more than 0.200% may result in a large number of coarse precipitates or inclusions. Such a case may result in an increase in the number of voids formed in a VDA bending test, and desired bendability may not be achieved. Thus, when Ti is contained, the Ti content is preferably 0.200% or less. The Ti content is more preferably 0.060% or less.

V: 0.200% or less

Like Nb or Ti, V increases TS and YS by forming fine carbide, nitride, or carbonitride during hot rolling or annealing. To produce such an effect, the V content is preferably 0.001% or more. The V content is more preferably 0.005% or more. The V content is even more preferably 0.010% or more, even further more preferably 0.030% or more.

On the other hand, a V content of more than 0.200% may result in a large number of coarse precipitates or inclusions. Such a case may result in an increase in the number of voids formed in a VDA bending test, and desired bendability may not be achieved. Thus, when V is contained, the V content is preferably 0.200% or less. The V content is more preferably 0.060% or less.

B: 0.0100% or less

B is an element that segregates at an austenite grain boundary and thereby enhances hardenability. B is also an element that suppresses the formation and grain growth of ferrite during cooling after annealing. To produce such an effect, the B content is preferably 0.0001% or more. The B content is more preferably 0.0002% or more. The B content is even more preferably 0.0005% or more, even further more preferably 0.0007% or more.

On the other hand, a B content of more than 0.0100% may result in a crack inside the steel sheet during hot rolling. This may also result in an increase in the number of voids formed in a VDA bending test, and desired bendability may not be achieved.

Thus, when B is contained, the B content is preferably 0.0100% or less. The B content is more preferably 0.0050% or less.

Cr: 1.000% or less

Cr is an element that enhances hardenability, and the addition of Cr can form a large amount of tempered martensite and ensure a TS of 1180 MPa or more and a high YS. To produce such an effect, the Cr content is preferably 0.0005% or more. The Cr content is more preferably 0.010% or more. The Cr content is even more preferably 0.030% or more, even further more preferably 0.050% or more.

On the other hand, a Cr content of more than 1.000% may result in an excessive increase in the area fraction of hard fresh martensite, introduction of a mobile dislocation into ferrite or bainitic ferrite, and a decrease in YS. Furthermore, fresh martensite may become a starting point of void formation in a VDA bending test, and the steel sheet may not have desired bendability. Thus, when Cr is contained, the Cr content is preferably 1.000% or less. The Cr content is more preferably 0.800% or less, even more preferably 0.700% or less, even further more preferably 0.200% or less.

Ni: 1.000% or less

Ni is an element that enhances hardenability, and the addition of Ni can form a large amount of tempered martensite and ensure a TS of 1180 MPa or more and a high YS. To produce such an effect, the Ni content is preferably 0.005% or more. The Ni content is more preferably 0.020% or more. The Ni content is even more preferably 0.040% or more, even further more preferably 0.060% or more.

On the other hand, a Ni content of more than 1.000% may result in an excessive increase in the area fraction of fresh martensite, introduction of a mobile dislocation into ferrite or bainitic ferrite, and a decrease in YS. Furthermore, fresh martensite may become a starting point of void formation in a VDA bending test, and the steel sheet may not have desired bendability. Thus, when Ni is contained, the Ni content is preferably 1.000% or less. The Ni content is more preferably 0.800% or less. The Ni content is even more preferably 0.600% or less, even further more preferably 0.400% or less.

Mo: 1.000% or less

Mo is an element that enhances hardenability, and the addition of Mo can form a large amount of tempered martensite and ensure a TS of 1180 MPa or more and a high YS. To produce such an effect, the Mo content is preferably 0.010% or more. The Mo content is more preferably 0.030% or more.

On the other hand, a Mo content of more than 1.000% may result in an excessive increase in the area fraction of fresh martensite, introduction of a mobile dislocation into ferrite or bainitic ferrite, and a decrease in YS. Furthermore, fresh martensite may become a starting point of void formation in a VDA bending test, and the steel sheet may not have desired bendability. Thus, when Mo is contained, the Mo content is preferably 1.000% or less. The Mo content is more preferably 0.500% or less, even more preferably 0.450% or less, even more preferably 0.400% or less. The Mo content is more preferably 0.350% or less, even further more preferably 0.300% or less. The Mo content is more preferably 0.100% or less.

Sb: 0.200% or less

Sb is an element effective in suppressing the diffusion of C near the surface of the steel sheet during annealing and controlling the formation of a soft layer near the surface of the steel sheet. An excessive increase of a soft layer near the surface of a steel sheet makes it difficult to achieve a TS of 1180 MPa or more. This also results in a decrease in YS. Thus, the Sb content is preferably 0.002% or more. The Sb content is more preferably 0.005% or more.

On the other hand, an Sb content of more than 0.200% may result in no soft layer near the surface of the steel sheet and degradation of energy absorption characteristics. Thus, when Sb is contained, the Sb content is preferably 0.200% or less. The Sb content is more preferably 0.020% or less.

Sn: 0.200% or less

Like Sb, Sn is an element effective in suppressing the diffusion of C near the surface of the steel sheet during annealing and controlling the formation of a soft layer near the surface of the steel sheet. An excessive increase of a soft layer near the surface of a steel sheet makes it difficult to achieve a TS of 1180 MPa or more. This also results in a decrease in YS. Thus, the Sn content is preferably 0.002% or more. The Sn content is more preferably 0.005% or more.

On the other hand, a Sn content of more than 0.200% may result in no soft layer near the surface of the steel sheet and degradation of energy absorption characteristics. Thus, when Sn is contained, the Sn content is preferably 0.200% or less. The Sn content is more preferably 0.020% or less.

Cu: 1.000% or less

Cu is an element that enhances hardenability, and the addition of Cu can form a large amount of tempered martensite and ensure a TS of 1180 MPa or more and a high YS. To produce such an effect, the Cu content is preferably 0.005% or more. The Cu content is even more preferably 0.008% or more, even further more preferably 0.010% or more. The Cu content is more preferably 0.020% or more, even further more preferably 0.050% or more.
On the other hand, a Cu content of more than 1.000% may result in an excessive increase in the area fraction of fresh martensite and a large number of coarse precipitates or inclusions. In such a case, fresh martensite and a coarse precipitate or an inclusion may become starting points of void formation in a VDA bending test, and the steel sheet may not have desired bendability. Furthermore, an increase in the area fraction of fresh martensite may result in introduction of a mobile dislocation into ferrite or bainitic ferrite and a decrease in YS. Thus, when Cu is contained, the Cu content is preferably 1.000% or less. The Cu content is more preferably 0.200% or less.

Ta: 0.100% or less

Like Ti, Nb, and V, Ta increases TS and YS by forming fine carbide, nitride, or carbonitride during hot rolling or annealing. Furthermore, Ta partially dissolves in Nb carbide or Nb carbonitride and forms a complex precipitate, such as (Nb, Ta) (C, N). This suppresses coarsening of the precipitate and stabilizes precipitation strengthening. This further improves TS and YS. To produce such an effect, the Ta content is preferably 0.001% or more. The Ta content is even more preferably 0.002% or more, even further more preferably 0.004% or more.
On the other hand, a Ta content of more than 0.100% may result in a large number of coarse precipitates or inclusions. Such a case may result in an increase in the number of voids formed in a VDA bending test, and desired bendability may not be achieved. Thus, when Ta is contained, the Ta content is preferably 0.100% or less. The Ta content is even more preferably 0.090% or less, even further more preferably 0.080% or less. The Ta content is even more preferably 0.020% or less.

W: 0.500% or less

W is an element that enhances hardenability, and the addition of W can form a large amount of tempered martensite and ensure a TS of 1180 MPa or more and a high YS. To produce such an effect, the W content is preferably 0.001% or more. The W content is more preferably 0.030% or more.
On the other hand, a W content of more than 0.500% may result in an excessive increase in the area fraction of hard fresh martensite, introduction of a mobile dislocation into ferrite or bainitic ferrite, and a decrease in YS. Furthermore, fresh martensite may become a starting point of void formation in a VDA bending test, and the steel sheet may not have desired bendability. Thus, when W is contained, the W content is preferably 0.500% or less. The W content is more preferably 0.450% or less, even more preferably 0.400% or less. The W content is even further more preferably 0.300% or less. The W content is even more preferably 0.100% or less.

Mg: 0.0200% or less

Mg is an element effective in spheroidizing the shape of an inclusion, such as a sulfide or an oxide, and improving the ultimate deformability and bendability of a steel sheet. To produce such an effect, the Mg content is preferably 0.0001% or more. Mg content is more preferably 0.0005% or more, even more preferably 0.0010% or more, even further more preferably 0.0020% or more.
On the other hand, a Mg content of more than 0.0200% may result in a large number of coarse precipitates or inclusions. Such a case may result in an increase in the number of voids formed in a VDA bending test, and desired bendability may not be achieved. Thus, when Mg is contained, the Mg content is preferably 0.0200% or less. The Mg content is more preferably 0.0180% or less, even more preferably 0.0150% or less.

Zn: 0.0200% or less

Zn is an element effective in spheroidizing the shape of an inclusion and improving the ultimate deformability and bendability of a steel sheet. To produce such an effect, the Zn content is preferably 0.0010% or more. The Zn content is more preferably 0.0020% or more, even more preferably 0.0030% or more.

On the other hand, a Zn content of more than 0.0200% may result in a large number of coarse precipitates or inclusions. Such a case may result in an increase in the number of voids formed in a VDA bending test, and desired bendability may not be achieved. Thus, when Zn is contained, the Zn content is preferably 0.0200% or less.

The Zn content is more preferably 0.0180% or less, even more preferably 0.0150% or less.

Co: 0.0200% or less

Like Zn, Co is an element effective in spheroidizing the shape of an inclusion and improving the ultimate deformability and bendability of a steel sheet. To produce such an effect, the Co content is preferably 0.0010% or more. The Co content is more preferably 0.0020% or more, even more preferably 0.0030% or more.

On the other hand, a Co content of more than 0.0200% may result in a large number of coarse precipitates or inclusions. Such a case may result in an increase in the number of voids formed in a VDA bending test, and desired bendability may not be achieved. Thus, when Co is contained, the Co content is preferably 0.0200% or less. The Co content is more preferably 0.0180% or less, even more preferably 0.0150% or less.

Zr: 0.1000% or less

Like Zn and Co, Zr is an element effective in spheroidizing the shape of an inclusion and improving the ultimate deformability and bendability of a steel sheet. To produce such an effect, the Zr content is preferably 0.0010% or more.

On the other hand, a Zn content of more than 0.1000% may result in a large number of coarse precipitates or inclusions. Such a case may result in an increase in the number of voids formed in a VDA bending test, and desired bendability may not be achieved. Thus, when Zr is contained, the Zr content is preferably 0.1000% or less. Zr content is more preferably 0.0300% or less, even more preferably 0.0100% or less.

Ca: 0.0200% or less

Ca is present as an inclusion in steel. A Ca content of more than 0.0200% results in a large number of coarse inclusions. Such a case may result in an increase in the number of voids formed in a VDA bending test, and desired bendability may not be achieved. Thus, when Ca is contained, the Ca content is preferably 0.0200% or less. The Ca content is preferably 0.0020% or less.

The Ca content may have any lower limit and is preferably 0.0005% or more. Due to constraints on production technology, the Ca content is preferably 0.0010% or more.

Se: 0.0200% or less, Te: 0.0200% or less, Ge: 0.0200% or less, As: 0.0500% or less, Sr: 0.0200% or less, Cs: 0.0200% or less, Hf: 0.0200% or less, Pb: 0.0200% or less, Bi: 0.0200% or less, REM: 0.0200% or less

Se, Te, Ge, As, Sr, Cs, Hf, Pb, Bi, and REM are elements effective in improving the ultimate deformability and bendability of a steel sheet. To produce such an effect, the Se, Te, Ge, As, Sr, Cs, Hf, Pb, Bi, and REM contents are preferably 0.0001% or more. On the other hand, Se, Te, Ge, Sr, Cs, Hf, Pb, Bi, and REM contents each exceeding 0.0200% or an As content of more than 0.0500% may result in a large number of coarse precipitates or inclusions. Such a case may result in an increase in the number of voids formed in a VDA bending test, and desired bendability may not be achieved. Thus, when at least one of Se, Te, Ge, As, Sr, Cs, Hf, Pb, Bi, and REM is contained, each of the Se, Te, Ge, As, Sr, Cs, Hf, Pb, Bi, and REM contents is preferably 0.0200% or less, and the As content is preferably 0.0500% or less.

The Se content is more preferably 0.0005% or more, even more preferably 0.0008% or more.

The Se content is more preferably 0.0180% or less, even more preferably 0.0150% or less.

The Te content is more preferably 0.0005% or more, even more preferably 0.0008% or more.

The Te content is more preferably 0.0180% or less, even more preferably 0.0150% or less.

The Ge content is more preferably 0.0005% or more, even more preferably 0.0008% or more.

The Ge content is more preferably 0.0180% or less, even more preferably 0.0150% or less.

The As content is more preferably 0.0010% or more, even more preferably 0.0015% or more.

The As content is more preferably 0.0400% or less, even more preferably 0.0300% or less.

The Sr content is more preferably 0.0005% or more, even more preferably 0.0008% or more.

The Sr content is more preferably 0.0180% or less, even more preferably 0.0150% or less.

The Cs content is more preferably 0.0005% or more, even more preferably 0.0008% or more.

The Cs content is more preferably 0.0180% or less, even more preferably 0.0150% or less.

The Hf content is more preferably 0.0005% or more, even more preferably 0.0008% or more.

The Hf content is more preferably 0.0180% or less, even more preferably 0.0150% or less.

The Pb content is more preferably 0.0005% or more, even more preferably 0.0008% or more.

The Pb content is more preferably 0.0180% or less, even more preferably 0.0150% or less.

The Bi content is more preferably 0.0005% or more, even more preferably 0.0008% or more.

The Bi content is more preferably 0.0180% or less, even more preferably 0.0150% or less, even further more preferably 0.0100% or less.

The REM content is more preferably 0.0005% or more, even more preferably 0.0008% or more.

The REM content is more preferably 0.0180% or less, even more preferably 0.0150% or less.

The term "REM", as used herein, refers to scandium (Sc) with an atomic number of 21, yttrium (Y) with an atomic number of 39, and lanthanoids from lanthanum (La) with an atomic number of 57 to lutetium (Lu) with an atomic number of 71. The term "REM content", as used herein, refers to the total content of one or two or more elements selected from the above-described REM. REM is preferably, but not limited to, La and/or Ce.

A base steel sheet of a steel sheet according to the present invention has a chemical composition containing, on a mass percent basis,

C: 0.050% or more and 0.400% or less, Si: 0.20% or more and 3.00% or less, Mn: 1.00% or more and less than 3.50%, P: 0.001% or more and 0.100% or less, S: 0.0001% or more and 0.0200% or less, Al: 0.010% or more and 2.000% or less, and N: 0.0100% or less, and optionally at least one selected from Nb: 0.200% or less, Ti: 0.200% or less, V: 0.200% or less, B: 0.0100% or less, Cr: 1.000% or less, Ni: 1.000% or less, Mo: 1.000% or less, Sb: 0.200% or less, Sn: 0.200% or less, Cu: 1.000% or less, Ta: 0.100% or less, W: 0.500% or less, Mg: 0.0200% or less, Zn: 0.0200% or less, Co: 0.0200% or less, Zr: 0.1000% or less, Ca: 0.0200% or less, Se: 0.0200% or less, Te: 0.0200% or less, Ge: 0.0200% or less, As: 0.0500% or less, Sr: 0.0200% or less, Cs: 0.0200% or less, Hf: 0.0200% or less, Pb: 0.0200% or less, Bi: 0.0200% or less, and REM: 0.0200% or less, the remainder being Fe and incidental impurities.

Steel Microstructure

Next, the steel microstructure of a steel sheet (base steel sheet) according to an embodiment of the present invention will be described.

A microstructure at a quarter thickness position of the base steel sheet includes the area fraction of ferrite: less than 20.0% (including 0.0%), the area fraction of retained austenite: 3.0% or more and 15.0% or less, the area fraction of fresh martensite: 10.0% or less (including 0.0%), and the total area fraction of bainitic ferrite and tempered martensite (excluding retained austenite): 45.0% or more and 90.0% or less, and satisfies $L_{F-MA}/L_F$: 0.70 or less.

Area fraction of ferrite: less than 20.0% (including 0.0%)

Soft ferrite is a phase that improves ductility. However, the area fraction of ferrite sometimes increases excessively, and it is sometimes difficult to achieve a TS of 1180 MPa or more. Furthermore, YR may be decreased. Thus, the area fraction of ferrite is less than 20.0%. The area fraction of ferrite is preferably 15.0% or less. The lower limit of the area fraction of ferrite may be, but is not limited to, 0.0%.

Area fraction of retained austenite: 3.0% or more and 15.0% or less

From the perspective of achieving high ductility, the area fraction of retained austenite is 3.0% or more. The area fraction of retained austenite is preferably 3.5% or more.

On the other hand, an excessive increase in the area fraction of retained austenite results in a decrease in the amount of carbon in the retained austenite and instability. In that case, a desired YS cannot be achieved. Thus, the area fraction of retained austenite is 15.0% or less. The area fraction of retained austenite is preferably 12.0% or less, more preferably 10.0% or less.

Area fraction of fresh martensite: 10.0% or less (including 0.0%)

An excessive increase in the area fraction of fresh martensite may result in introduction of a mobile dislocation into ferrite or bainitic ferrite, and desired YS may not be achieved. Furthermore, a desired YR cannot be achieved. Furthermore, fresh martensite may become a starting point of void formation in a VDA bending test, and the steel sheet may not have desired bendability. From the perspective of achieving high YS and providing a steel sheet with a high bendability, the area fraction of fresh martensite is 10.0% or less, preferably 5.0% or less. The lower limit of the area fraction of fresh martensite may be, but is not limited to, 0.0%.

The term "fresh martensite" refers to as-quenched (untempered) martensite.

Total area fraction of bainitic ferrite and tempered martensite: 45.0% or more and 90.0% or less

Bainitic ferrite and tempered martensite have an intermediate hardness between soft ferrite and hard fresh martensite and the like and are important phases to provide a steel sheet with a high bendability. Bainitic ferrite is also a phase useful for obtaining an appropriate amount of retained austenite by utilizing the diffusion of C from the bainitic ferrite to non-transformed austenite. Tempered martensite is effective in improving TS and YS. Thus, the total area fraction of bainitic ferrite and tempered martensite is 45.0% or more, preferably 50.0% or more.

On the other hand, an excessive increase in the total area fraction of bainitic ferrite and tempered martensite results in a decrease in ductility. Thus, the total area fraction of bainitic ferrite and tempered martensite is 90.0% or less. The total area fraction of bainitic ferrite and tempered martensite is preferably 85.0% or less.

The term "bainitic ferrite" refers to upper bainite that is formed in a relatively high temperature region and has a small amount of carbide.

$L_{F-MA}/L_F$: 0.70 or less

Furthermore, a steel microstructure of a base steel sheet of a steel sheet according to an embodiment of the present invention satisfies $L_{F-MA}/L_F$: 0.70 or less.

$L_{F-MA}$ denotes the grain boundary length in contact with a MA microstructure (fresh martensite and/or retained austenite) on a ferrite grain boundary, and

$L_F$ denotes the grain boundary length of ferrite. $L_{F-MA}$ and $L_F$ are grain boundary lengths measured in the same unit.

In a steel sheet with a multi-phase microstructure according to an embodiment of the present invention, a mobile dislocation is introduced into ferrite due to the presence of fresh martensite, the ferrite is likely to yield, and the YS is decreased. In particular, at $L_{F-MA}/L_F$ of more than 0.70, a desired YS may not be achieved. Furthermore, a desired YR cannot be achieved. Thus, $L_{F-MA}/L_F$ is 0.70 or less. $L_{F-MA}/L_F$ is preferably 0.68 or less, more preferably 0.65 or less. The lower limit of $L_{F-MA}/L_F$ may be, but is not limited to, 0.00.

To set $L_{F-MA}/L_F$ to 0.70 or less, for example, heating from the annealing temperature at a rate of 10°C/s or more in a rapid heating step described later can form austenite around ferrite only by diffusion of C. Such austenite has a high $M_S$ temperature and becomes bainitic ferrite or martensite during cooling. Furthermore, the martensite becomes tempered martensite in the reheating and holding step. That is, a microstructure other than the hard phase (hard second phase) is formed from austenite formed only by the diffusion of C.

The area fraction of the remaining microstructure other than the above is preferably 10.0% or less. The area fraction of the remaining microstructure is more preferably 5.0% or less. The area fraction of the remaining microstructure may be 0.0%.

The remaining microstructure is, for example, but not limited to, carbide, such as lower bainite, pearlite, or cementite. The type of the remaining microstructure can be determined, for example, by scanning electron microscope (SEM) observation.

Surface soft layer: total area fraction of non-ferrite microstructure is 1/2 or less of that at quarter thickness position

A base steel sheet of a steel sheet according to an embodiment of the present invention preferably has a surface soft layer on a surface layer of the base steel sheet. The surface soft layer contributes to the suppression of the progress of bending cracks during press forming and in case of a vehicle body collision and improves the bendability and energy absorption characteristics of the steel sheet.

The surface soft layer means a decarburized layer and is a surface layer region in which the total area fraction of a non-ferrite microstructure is $S_A/2$ or less, wherein $S_A$ denotes the total area fraction of the non-ferrite microstructure in a cross section at a quarter thickness position.

The surface soft layer is formed in a region of 20 $\mu$m or more from the surface of the base steel sheet in the sheet thickness direction. The region where the surface soft layer is formed is preferably 200 $\mu$m or less, more preferably 150 $\mu$m or less, even more preferably 120 $\mu$m or less, from the surface of the base steel sheet in the sheet thickness direction. The surface soft layer preferably has a thickness of 25 $\mu$m or more, more preferably 30 $\mu$m or more.

The quarter thickness position of the steel sheet at which the total area fraction $S_A$ of the non-ferrite microstructure is measured is a non-surface soft layer (a layer that does not satisfy the conditions of the surface soft layer defined in the present invention).

Here, the area fractions of ferrite, bainitic ferrite, tempered martensite, and a hard phase (hard second phase (retained austenite + fresh martensite)) at the quarter thickness position of the base steel sheet are measured as described below.

That is, a sample is cut out from a base steel sheet to form a thickness cross section parallel to the rolling direction of the base steel sheet as an observation surface. The observation surface of the sample is then mirror-polished with a diamond paste. The observation surface of the sample is then subjected to final polishing with colloidal silica and is then etched with 3% by volume nital to expose the microstructure.

Three visual fields of 25.6 $\mu$m x 17.6 $\mu$m are then photographed with a scanning electron microscope (SEM) under the conditions of an acceleration voltage of 15 kV and a magnification of 5000 times at the position of the outermost surface layer of the observation surface of the sample and at the quarter thickness position.

From a microstructure image thus photographed (see Fig. 1), ferrite F, bainitic ferrite BF, tempered martensite TM, and a hard phase H (hard second phase (retained austenite + fresh martensite)) are identified as described below.

Ferrite: A region with a black color and with a massive form. Almost no iron-based carbide is contained. When an iron-based carbide is contained, however, the area of ferrite includes the area of the iron-based carbide. The same applies to bainitic ferrite and tempered martensite described later.

Bainitic ferrite: A region with a black to dark gray color and with a massive form, an indefinite form, or the like. No or a relatively small amount of iron-based carbide is contained.

Tempered martensite: A region with a gray color and with an indefinite form. A relatively large amount of iron-based carbide is contained.

Hard phase (hard second phase (retained austenite + fresh martensite)): A region with a white to light gray color and with an indefinite form. No iron-based carbide is contained. A relatively large one may have a gradually darker color with increasing distance from the interface with another microstructure and may have a dark gray interior.

Carbide: A region with a white color and with a dot-like or linear form. It is contained in tempered martensite, bainitic ferrite, and ferrite.

Remaining microstructure: Lower bainite, pearlite, internal oxide, or the like with a known form and the like.

The region of each phase identified in the microstructure image is then color-coded (4-level thresholding) using Adobe Photoshop of Adobe Systems Inc. to calculate the area of each phase. A value obtained by dividing the area of each phase (total area for each phase) by the area of the observation region (25.6 $\mu$m x 17.6 $\mu$m) and multiplying the result by 100 is calculated for three visual fields. The average value of these values is defined as the area fraction of each phase (ferrite, bainitic ferrite, tempered martensite, and hard second phase).

The area fraction of retained austenite is measured as described below.

The base steel sheet is mechanically ground to a quarter thickness position in the sheet thickness direction (depth direction) and is then chemically polished with oxalic acid to form an observation surface. The observation surface is then observed by X-ray diffractometry. A MoK$\alpha$ ray is used as an incident X-ray, the ratio of the diffraction intensity of each of the (200), (220), and (311) planes of fcc iron (austenite) to the diffraction intensity of each of the (200), (211), and (220) planes of bcc iron is determined to calculate the volume fraction of retained austenite from the ratio of the diffraction intensity of each plane. Assuming that the retained austenite is three-dimensionally homogeneous, the volume fraction of the retained austenite is defined as the area fraction of the retained austenite.

The area fraction of fresh martensite is determined by subtracting the area fraction of retained austenite from the area fraction of the hard phase (hard second phase) determined as described above.

[Area fraction of fresh martensite (%)] = [area fraction of hard second phase (%)] - [area fraction of retained austenite (%)]

The area fraction of the remaining microstructure is calculated by subtracting the area fraction of ferrite, the area fraction of bainitic ferrite, the area fraction of tempered martensite, and the area fraction of the hard phase (hard second phase) determined as described above from 100.0%.

[Area fraction of remaining microstructure (%)] = 100.0 - [area fraction of ferrite (%)] - [area fraction of bainitic ferrite (%)] - [area fraction of tempered martensite (%)] - [area fraction of hard second phase (%)]

To measure the microstructure in the surface soft layer, in a case where a galvanized layer is formed on the steel sheet, first, the galvanized layer is removed, and the microstructure is measured in the same manner as at the quarter thickness position at intervals of 1 $\mu$m from a position of 1 $\mu$m from the surface of the base steel sheet in the sheet thickness direction to a position of 100 $\mu$m in the sheet thickness direction. The measurement is then performed at intervals of 20 $\mu$m up to the center of the sheet thickness.

$L_{F-MA}$ and $L_F$ are measured as described below.

In the microstructure image (for example, see Fig. 1), ferrite and a hard phase (hard second phase) are identified in the above-described manner. Ferrite and a hard phase (hard second phase) are then respectively extracted by manual color coding to determine $L_{F-MA}$ and $L_F$ using open source ImageJ.

More specifically, a curve along a ferrite grain boundary $L_F$ and a curve along a grain boundary $L_{F-MA}$ in contact with ferrite and a martensite microstructure (MA microstructure: fresh martensite + retained austenite) are drawn on the microstructure image after the 4-level thresholding using an object function of Illustrator of Adobe Inc., and the lengths of the curves are measured. A value calculated by dividing $L_{F-MA}$ by $L_F$ for each image is averaged as $L_{F-MA}/L_F$.

Next, mechanical characteristics of a steel sheet according to an embodiment of the present invention will be described.

Tensile strength (TS): 1180 MPa or more and less than 1470 MPa

A steel sheet according to an embodiment of the present invention has a tensile strength TS of 1180 MPa or more and less than 1470 MPa.

The yield stress (YS), the yield ratio (YR), and the total elongation (El) of a steel sheet according to an embodiment of the present invention, and the bendability and energy absorption characteristics of the steel sheet are as described above.

The tensile strength (TS), the yield stress (YS), the yield ratio (YR), and the total elongation (El) are measured in the tensile test according to JIS Z 2241 (2011) described later in Examples. The bendability and the energy absorption characteristics of the steel sheet are measured in a VDA bending test described later in Examples.

Galvanized Layer

A steel sheet according to an embodiment of the present invention may have a galvanized layer formed on a base steel sheet, and the galvanized layer may be provided on only one surface of the base steel sheet or may be provided on both surfaces thereof.

The term "galvanized layer", as used herein, refers to a coated layer containing Zn as a main component (Zn content: 50.0% by mass or more), for example, a hot-dip galvanized layer, a hot-dip galvannealed layer, or an electrogalvanized layer.

The hot-dip galvanized layer is preferably composed of, for example, Zn, 20.0% by mass or less of Fe, and 0.001% by mass or more and 1.0% by mass or less of Al. The hot-dip galvanized layer may optionally contain one or two or more elements selected from the group consisting of Pb, Sb, Si, Sn, Mg, Mn, Ni, Cr, Co, Ca, Cu, Li, Ti, Be, Bi, and REM in a total amount of 0.0% by mass or more and 3.5% by mass or less. The Fe content of the hot-dip galvanized layer is more preferably less than 7.0% by mass. The remainder other than the above elements is incidental impurities.

The hot-dip galvannealed layer is preferably composed of, for example, Zn, 20% by mass or less of Fe, and 0.001% by mass or more and 1.0% by mass or less of Al. The hot-dip galvannealed layer may optionally contain one or two or more elements selected from the group consisting of Pb, Sb, Si, Sn, Mg, Mn, Ni, Cr, Co, Ca, Cu, Li, Ti, Be, Bi, and REM in a total amount of 0.0% by mass or more and 3.5% by mass or less. The Fe content of the hot-dip galvannealed layer is more preferably 7.0% by mass or more, even more preferably 8.0% by mass or more. The Fe content of the hot-dip galvannealed layer is more preferably 15.0% by mass or less, even more preferably 12.0% by mass or less. The remainder other than the above elements is incidental impurities.

The electrogalvanized layer is preferably composed of, for example, Zn and 9.0% by mass or more and 25.0% by mass or less of Ni. The remainder other than the above elements is incidental impurities.

Furthermore, the coating weight per side of the hot-dip galvanized layer and the hot-dip galvannealed layer is preferably, but not limited to, 20 g/m$^2$ or more. The coating weight per side of the hot-dip galvanized layer and the hot-dip galvannealed layer is preferably 80 g/m$^2$ or less. The coating weight per side of the electrogalvanized layer is preferably, but not limited to, 10 g/m$^2$ or more. The coating weight per side of the electrogalvanized layer is preferably 100 g/m$^2$ or less.

The coating weight of the galvanized layer (the hot-dip galvanized layer, the hot-dip galvannealed layer, or the electrogalvanized layer) is measured as described below.

That is, a treatment liquid is prepared by adding 0.6 g of a corrosion inhibitor for Fe ("IBIT 700BK" (registered trademark) manufactured by Asahi Chemical Co., Ltd.) to 1 L of 10% by mass aqueous hydrochloric acid. The steel sheet as a sample is immersed in the treatment liquid to dissolve the galvanized layer. The mass loss of the sample material due to the dissolution is then measured and is divided by the surface area of the base steel sheet (the surface area of the coated portion) to calculate the coating weight (g/m$^2$).

The thickness of a steel sheet according to an embodiment of the present invention is preferably, but not limited to, more than 0.8 mm, more preferably 0.9 mm or more. The thickness is even more preferably 1.0 mm or more, most preferably 1.2 mm or more.

The steel sheet preferably has a thickness of 3.5 mm or less. The thickness is more preferably 2.3 mm or less.

The width of a steel sheet according to the present invention is preferably, but not limited to, 500 mm or more, more preferably 750 mm or more. The steel sheet preferably has a width of 1600 mm or less, more preferably 1450 mm or less.

[2. Method for Producing Steel Sheet]

Next, a method for producing a steel sheet according to an embodiment of the present invention will be described.

A method for producing a steel sheet according to an embodiment of the present invention includes a hot rolling step of hot-rolling a steel slab with the chemical composition to form a hot-rolled steel sheet, a pickling step of pickling the hot-rolled steel sheet, an annealing step of heating the steel sheet after the pickling step or the steel sheet after the cold rolling step and annealing the steel sheet under conditions of an annealing temperature of 720°C or more and 860°C or less, a holding time of 20 seconds or more, and an atmosphere with a dew-point temperature of -10°C or more, a rapid heating step of rapidly heating the steel sheet from the annealing temperature to the annealing temperature + 10°C or more at a heating rate of 10°C/s or more, a cooling step of cooling the steel sheet after the rapid heating step to a cooling stop temperature of 100°C or more and 300°C or less, and a reheating and holding step of heating the steel sheet after the cooling step to a tempering temperature of 460°C or less and holding the steel sheet in the temperature range for a tempering time of 10 seconds or more and 2000 seconds or less, or further includes a cold rolling step of cold-rolling the steel sheet after the pickling step and before the annealing step at a rolling reduction of 20% or more and 80% or less to form a cold-rolled steel sheet.

The line speed LS (m/min) of the steel sheet in the annealing step preferably satisfies the following formula (1):

$$3.0/(t \times W \times 4.716 \times 10^{-4}) < LS < 390.0/(t \times W \times 4.716 \times 10^{-4}) \qquad \text{formula (1)}$$

wherein t denotes the sheet thickness (mm) after the pickling step and before the annealing step, and W denotes the sheet thickness (mm) after the pickling step and before the annealing step.

Unless otherwise specified, the temperatures described above mean the surface temperatures of a steel slab and a steel sheet.

First, a steel slab with the chemical composition described above is prepared. For example, a steel material is melted to produce a molten steel with the chemical composition described above. The melting method may be, but is not limited to, any known melting method using a converter, an electric arc furnace, or the like. The resulting molten steel is then solidified into a steel slab. A steel slab can be produced from molten steel by any method, for example, a continuous casting method, an ingot casting method, a thin slab casting method, or the like. From the perspective of preventing macrosegregation, it is preferable to employ a continuous casting method as a method for producing a steel slab from molten steel.

(Hot Rolling Step)

Next, in the hot rolling step, the steel slab is hot-rolled to form a hot-rolled steel sheet.

The hot rolling may be performed in an energy-saving process. The energy-saving process may be hot charge rolling (a method of charging a furnace with the steel slab as a hot piece not cooled to room temperature and hot-rolling the steel slab), hot direct rolling (a method of immediately rolling the steel slab after a short heat retention of the steel slab), or the like.

The hot rolling may be performed under any conditions, for example, under the following conditions.

That is, the steel slab is temporarily cooled to room temperature and is then reheated and rolled. The slab heating temperature (reheating temperature) is preferably 1100°C or more from the perspective of melting carbide and reducing rolling force. Furthermore, to prevent an increase in scale loss, the slab heating temperature is preferably 1300°C or less. The slab heating temperature is based on the temperature of the steel slab surface.

The steel slab is then rough-rolled in the usual manner to form a rough-rolled sheet (hereinafter also referred to as a sheet bar). The sheet bar is then finish-rolled to form a hot-rolled steel sheet. When the slab heating temperature is relatively low, it is preferable to heat the sheet bar using a bar heater or the like before the finish rolling from the perspective of preventing trouble during the finish rolling. The finish rolling temperature is preferably 800°C or more to reduce the rolling load. Furthermore, when the rolling reduction of austenite in an unrecrystallized state is increased, an abnormal microstructure elongated in the rolling direction may be developed and impair the workability of an annealed sheet. Furthermore, at a finish rolling temperature of 800°C or more, not only the steel microstructure of the hot-rolled steel sheet but also the steel microstructure of the final product is likely to be uniform. A nonuniform steel microstructure tends to result in a decrease in bendability.

On the other hand, at a finish rolling temperature of more than 950°C, the amount of oxide (scale) formed increases. This may roughen the interface between a steel substrate and the oxide and impair the surface quality of the steel sheet after pickling and cold rolling. This may also coarsen crystal grains and reduce the strength and bendability of the steel sheet. Thus, the finish rolling temperature is preferably 950°C or less. Thus, the finish rolling temperature is preferably 800°C or more and 950°C or less.

After the finish rolling, the hot-rolled steel sheet is coiled. The coiling temperature is preferably 450°C or more. The coiling temperature is preferably 750°C or less.

Sheet bars may be joined together during hot rolling to continuously perform the finish rolling. The sheet bar may be temporarily coiled before the finish rolling.

Furthermore, to reduce the rolling force during hot rolling, part or all of the finish rolling may be lubricated rolling. The lubricated rolling is also effective in making the shape and the material quality of a steel sheet uniform. The friction coefficient during the lubricated rolling is preferably 0.10 or more and 0.25 or less.

In the hot rolling step including rough rolling and finish rolling (hot rolling step), the steel slab is typically formed into a sheet bar by the rough rolling and then into a hot-rolled steel sheet by the finish rolling. Depending on the mill capacity or the like, however, such classification is not concerned, provided that a predetermined size is obtained.

(Pickling Step)

The hot-rolled steel sheet after the hot rolling step is pickled. The pickling can remove an oxide from the surface of the steel sheet and ensure high chemical convertibility and coating quality. The pickling may be performed once or multiple times. The pickling may be performed under any conditions and may be performed in the usual manner.

(Cold Rolling Step)

Next, when necessary, the hot-rolled steel sheet is cold-rolled to produce a cold-rolled steel sheet. The cold rolling is performed, for example, by multi-pass rolling requiring two or more passes, such as tandem multi-stand rolling or reverse rolling.
The rolling reduction (cumulative rolling reduction ratio) in the cold rolling is preferably, but not limited to, 20% or more. The rolling reduction in the cold rolling is preferably 80% or less. When the rolling reduction of the cold rolling is less than 20%, coarsening and nonuniformity of the steel microstructure are likely to occur in the annealing step, and the final product may have a decrease in TS and bendability. On the other hand, a rolling reduction of more than 80% in the cold rolling tends to result in a steel sheet with a shape defect and may result in an uneven galvanized coating weight.
Optionally, the cold-rolled steel sheet after the cold rolling may be pickled.

(Annealing Step)

Next, in an embodiment of the present invention, after the pickling step (when cold rolling is performed, after the cold rolling step), the steel sheet thus produced is heated and annealed (held) at an annealing temperature of 720°C or more and 860°C or less for a holding time (annealing time) of 20 seconds or more. The annealing may be performed twice or more but is preferably performed once from the perspective of energy efficiency. The annealing step is a step including the heating treatment and soaking treatment.

Annealing temperature: 720°C or more and 860°C or less

An annealing temperature of less than 720°C results in an insufficient formation ratio of austenite during heating in a two-phase region of ferrite and austenite. This results in an excessive increase in the area fraction of ferrite after annealing and a decrease in YS. Furthermore, the amount of fresh martensite increases due to an excessive concentration of carbon in austenite during annealing, $L_{F-MA}/L_F$ exceeds 0.70, and the desired YS cannot be achieved. Furthermore, the bendability of the steel sheet may not be achieved. This also makes it difficult to achieve a TS of 1180 MPa or more.
On the other hand, an annealing temperature of more than 860°C results in an insufficient proportion of ferrite during annealing, suppressed diffusion of C near the surface of the steel sheet, and no formation of the desired surface soft layer. Thus, the annealing temperature is 720°C or more and 860°C or less. The annealing temperature is preferably 850°C or less.
The annealing temperature is the highest temperature reached in the annealing step.

Holding time (annealing time): 20 seconds or more

A holding time (annealing time) of less than 20 seconds results in an insufficient formation ratio of austenite during heating in a two-phase region of ferrite and austenite. This may result in an excessive increase in the area fraction of ferrite after annealing and a decrease in YS. This also results in a decrease in YR. Furthermore, the amount of fresh martensite may increase due to an excessive concentration of carbon in austenite during annealing, $L_{F-MA}/L_F$ may exceed 0.70, and the desired YS may not be achieved. This also results in a decrease in YR. Furthermore, the bendability of the steel sheet may not be achieved. This also makes it difficult to achieve a TS of 1180 MPa or more. Thus, the holding time (annealing time) is 20 seconds or more. The holding time is preferably 30 seconds or more, more preferably 50 seconds or more.
The holding time may have any upper limit and is preferably 900 seconds or less, more preferably 800 seconds or less.
The term "holding time" refers to the holding time in the temperature range of (annealing temperature - 40°C) or more and the annealing temperature or less. That is, the holding time includes, in addition to the holding time at the annealing temperature, the residence time in the temperature range of (annealing temperature - 40°C) or more and the annealing temperature or less in the heating and cooling before and/or after reaching the annealing temperature.

Dew-point temperature of atmosphere of annealing step (annealing atmosphere): -10°C or more

In an embodiment of the present invention, the dew-point temperature of the atmosphere in the annealing step (annealing atmosphere) is -10°C or more. Annealing with a dew-point temperature of -10°C or more in the annealing atmosphere in the annealing step can promote the decarburization reaction and form a surface soft layer with a desired thickness. The dew-point temperature of the annealing atmosphere in the annealing step is preferably - 5°C or more, more preferably 0°C or more, even more preferably more than 5°C.

The dew-point temperature of the annealing atmosphere in the annealing step may have any upper limit but is preferably 30°C or less to improve the coating adhesion when the galvanized layer is provided.

$$3.0/(t \times W \times 4.716 \times 10^{-4}) < LS < 390.0/(t \times W \times 4.716 \times 10^{-4}) \qquad \text{formula (1)}$$

In the present invention, from the perspective of production efficiency, the line speed LS (m/min) of the steel sheet in the annealing step preferably satisfies the formula (1).

In the formula (1), t denotes the sheet thickness (mm) after the pickling step and before the annealing step, and W denotes the sheet width (mm) after the pickling step and before the annealing step.

The production efficiency can be E represented by the following formula (2):

$$E(ton/h) = LS \times t \times W \times \rho \times 60 \times 10^{-6} \qquad \text{formula (2)}$$

wherein t denotes the sheet thickness (mm), W denotes the sheet width (mm), $\rho$ denotes the specific gravity of iron (ton/m$^3$), and $\rho$ = 7.86 (ton/m$^3$).

In this case, E is preferably more than 3.0 ton/h and less than 390.0 ton/h.

The above formula (1) can be derived from the formula (2).

E of 3.0 ton/h or less may result in excessive formation of a surface soft layer during annealing and may make it difficult to achieve a TS of 1180 MPa or more. This may result in a decrease in YS.

On the other hand, E of 390.0 ton/h or more may make it difficult to form a desired surface soft layer during annealing, and the bendability of the steel sheet may not be achieved.

Thus, E is preferably more than 3.0 ton/h and less than 390.0 ton/h.

E is more preferably 16.0 ton/h or more. E is more preferably 190.0 ton/h or less.

From the above, LS (m/min) is preferably more than 3.0/(t x W x 4.716 x 10$^{-4}$). LS (m/min) is more preferably 16.0/(t x W x 4.716 x 10$^{-4}$) or more.

LS (m/min) is preferably less than 390.0/(t x W x 4.716 x 10$^{-4}$)

LS (m/min) is more preferably 190.0/(t x W x 4.716 x 10$^{-4}$) or less.

The line speed LS (m/min) is calculated by the distance (m) by which the steel sheet is conveyed in the annealing step/the time (min) required for conveying the steel sheet in the annealing step.

A heat treatment furnace in the annealing step is typically a radiant tube furnace. The annealing temperature can be determined with a thermometer that measures the surface temperature of the steel sheet. The method of temperature measurement is suitably, for example, but not limited to, a radiation thermometer that measures the temperature by sensing infrared radiation emitted by the steel sheet. When a radiation thermometer is used, a cover may be provided between a measurement unit of the radiation thermometer and a detection portion of the steel sheet because the radiation thermometer may be affected by reflected light of infrared radiation emitted from a surrounding furnace body. Furthermore, since there is an influence of the emissivity of the surface of the steel sheet, a multiple reflection type measurement method utilizing a wedge-shaped space between a furnace feed roller and the steel sheet may be adopted.

(Rapid Heating Step)

In an embodiment of the present invention, after the annealing step, a steel sheet produced as described above is rapidly heated from the annealing temperature to the annealing temperature + 10°C or more at a heating rate of 10°C/s or more.

When annealing is performed twice or more in the above-described annealing step, treatment in a rapid heating step performed after the annealing may be performed in the same manner twice or more, and the treatment in the rapid heating step may be performed once.

Heating rate: 10°C/s or more

In an embodiment of the present invention, the heating rate from the annealing temperature to the rapid heating step final temperature described later is 10°C/s or more.

At a heating rate of 10°C/s or more, the diffusion of Mn from ferrite to austenite is suppressed, and austenite can be formed only by the diffusion of C. Such austenite has a high $M_S$ temperature and becomes bainitic ferrite or martensite during cooling. Furthermore, the martensite becomes tempered martensite in the reheating and holding step. That is, a heating rate of 10°C/s or more can result in $L_{F-M7}/L_F$ of 0.70 or less and improved YS. This can also improve YR. This can also improve the production efficiency. Thus, the heating rate from the annealing temperature to the rapid heating step final temperature is 10°C/s or more. The heating rate is more preferably 30°C/s or more.

On the other hand, a heating rate of more than 300°C/s may result in a buckled steel sheet due to thermal stress, and uniformity may not be maintained due to a local high-temperature portion formed in the sheet width direction. Thus, the heating rate in the rapid heating step is preferably 300°C/s or less. More preferably, it is 150°C/s or less.

Rapid heating step final temperature: annealing temperature + 10°C or more

When the rapid heating step final temperature is lower than the annealing temperature + 10°C, the formation of austenite may be insufficient only by the diffusion of C, $L_{F-MA}/L_F$ may exceed 0.70, and YS may be decreased. This also results in a decrease in YR. Thus, the rapid heating step final temperature is the annealing temperature + 10°C or more.

The rapid heating step final temperature is preferably the annealing temperature + 30°C or more, more preferably the annealing temperature + 40°C or more.

The upper limit of the rapid heating step final temperature is preferably, but not limited to, lower than the annealing temperature + 100°C, more preferably the annealing temperature + 90°C or less, from the perspective of production efficiency.

An induction heating (IH) apparatus in the rapid heating step rapidly heats the steel sheet by adjusting the output so that the temperature of the steel sheet is included in the annealing temperature + 10°C or more (preferably 740°C or more and 940°C or less). Furthermore, in the case of heating in such a temperature range, the induction heating (IH) apparatus is desirably a transverse type. The appropriate rapid heating final temperature varies with the chemical composition of the steel sheet. Thus, it is preferable that a suitable temperature range is predicted in advance by measurement, calculation, or simulation, and is set in consideration of the temperature of the steel sheet in the annealing step.

The final temperature in the rapid heating step can be measured with a thermometer that measures the surface temperature of the steel sheet. The method of temperature measurement is suitably, for example, but not limited to, a radiation thermometer that measures the temperature by sensing infrared radiation emitted by the steel sheet. When a radiation thermometer is used, a cover may be provided between a measurement unit of the radiation thermometer and a detection portion of the steel sheet because the radiation thermometer may be affected by reflected light of infrared radiation emitted from a surrounding furnace body. Furthermore, since there is an influence of the emissivity of the surface of the steel sheet, a multiple reflection type measurement method utilizing a wedge-shaped space between a furnace feed roller and the steel sheet may be adopted. Furthermore, it is desirable to use a scanning radiation thermometer for temperature measurement at each position in the width direction of the steel sheet.

(Holding Step (Preferred Requirement))

After the rapid heating step and before the cooling step, when necessary, in the holding step, a holding treatment may be performed in which the steel sheet is retained in the temperature range of 400°C or more and 600°C or less (hereinafter also referred to as a holding temperature range) for less than 80 seconds.

Holding time in holding temperature range: less than 80 seconds

In the holding step, bainitic ferrite is formed, and C diffuses from the formed bainitic ferrite to non-transformed austenite adjacent to the bainitic ferrite. This ensures a predetermined area fraction of retained austenite.

A holding time of 80 seconds or more in the holding temperature range may result in an excessive increase in the area fraction of bainitic ferrite and a decrease in YS.

This may also result in excessive diffusion of C from bainitic ferrite to non-transformed austenite, retained austenite with an area fraction of more than 15.0%, and undesired YS and bendability. Thus, the holding time in the holding temperature range is preferably less than 80 seconds. The holding time in the holding temperature range is more preferably less than 60 seconds.

(Cooling Step)

The steel sheet after the rapid heating step (after the holding step in a case where the holding step is performed) is then cooled to a cooling stop temperature of 100°C or more and 300°C or less.

Cooling stop temperature: 100°C or more and 300°C or less

The cooling step is a subsequent step necessary to control the area fraction of tempered martensite and the area fraction of retained austenite formed in the subsequent reheating and holding step within predetermined ranges. At a cooling stop temperature of less than 100°C, almost all the non-transformed austenite present in the steel is transformed into martensite in the cooling step. This finally results in an excessive increase in the area fraction of tempered martensite, makes it difficult to form 3.0% by area or more of retained austenite, and results in a decrease in ductility.

On the other hand, a cooling stop temperature of more than 300°C results in a decrease in the area fraction of tempered martensite and an increase in the area fraction of fresh martensite. Consequently, a desired YS may not be achieved. This also results in a decrease in YR. Furthermore, bendability may not be achieved.

Thus, the cooling stop temperature is 100°C or more and 300°C or less. The cooling stop temperature is preferably 120°C or more. The cooling stop temperature is preferably 280°C or less.

(Galvanizing Step (Hot-Dip Galvanizing Step, Alloying Treatment Step))

During the cooling step, after the cooling step and before the reheating and holding step, or after the reheating and holding step, the steel sheet may be subjected to a galvanizing treatment (a hot-dip galvanizing treatment or further a hot-dip galvannealing treatment). A galvanized steel sheet can be produced by the galvanizing treatment. The galvanizing treatment may be a hot-dip galvanizing treatment or a galvannealing treatment (a hot-dip galvanizing treatment and an alloying treatment).

When the galvanizing treatment is performed during the cooling step, the galvanizing treatment is preferably performed after the steel sheet is cooled to a bath temperature in the range of 440°C to 500°C.

A steel sheet can be subjected to the hot-dip galvanizing treatment to produce a hot-dip galvanized steel sheet and can further be subjected to the alloying treatment to produce a hot-dip galvannealed steel sheet. The hot-dip galvanizing treatment and the alloying treatment are hereinafter also collectively referred to as a hot-dip galvannealing treatment.

In the hot-dip galvanizing treatment, preferably, the steel sheet is immersed in a hot-dip galvanizing bath at 440°C or more and 500°C or less, and the coating weight is then adjusted by gas wiping or the like. The hot-dip galvanizing bath is not particularly limited as long as the galvanized layer has the composition described above, and is preferably, for example, a galvanizing bath having a composition with an Al content of 0.10% by mass or more and with the remainder being Zn and incidental impurities. The Al content is preferably 0.23% by mass or less.

In the hot-dip galvannealing treatment, after the hot-dip galvanizing treatment performed in the manner described above, the galvanized steel sheet is preferably heated to an alloying temperature of 450°C or more to perform an alloying treatment. The alloying temperature is preferably 600°C or less.

An alloying temperature of less than 450°C may result in a low Zn-Fe alloying speed and make alloying difficult. On the other hand, an alloying temperature of more than 600°C results in transformation of non-transformed austenite into pearlite, makes it difficult to achieve a TS of 1180 MPa or more, and results in a decrease in ductility. The alloying temperature is more preferably 470°C or more. The alloying temperature is more preferably 570°C or less.

The coating weight of each of the hot-dip galvanized steel sheet (GI) and the hot-dip galvannealed steel sheet (GA) is preferably 20 $g/m^2$ or more per side. The coating weight per side of the galvanized layer is preferably 80 $g/m^2$ or less. The coating weight can be adjusted by gas wiping or the like.

(Reheating and Holding Step)

The steel sheet is then reheated to a tempering temperature of 460°C or less (hereinafter also referred to as a reheating temperature range) and is held at a tempering temperature of 460°C or less for a tempering time of 10 seconds or more and 2000 seconds or less.

Thus, martensite present in the steel at the end of the cooling step is tempered. Furthermore, austenite stable at room temperature, that is, retained austenite, is formed by diffusing supersaturated C dissolved in martensite into non-transformed austenite.

Tempering temperature (reheating temperature): 460°C or less

A tempering temperature (reheating temperature) of more than 460°C results in excessive tempering of martensite present in the steel at the end of the cooling step and makes it difficult to achieve a TS of 1180 MPa or more. This also results in a decrease in ductility because non-transformed austenite present in the steel at the end of the cooling step is decomposed as carbide (pearlite).

Thus, the tempering temperature (reheating temperature) is 460°C or less. The tempering temperature is the highest temperature reached in the reheating and holding step. The tempering temperature is preferably 450°C or less, more preferably 440°C or less.

The lower limit of the tempering temperature (reheating temperature) is not particularly limited, but when the tempering temperature is 300°C or less, martensite present in the steel at the end of the cooling step may not be sufficiently tempered, and fresh martensite may increase excessively. Consequently, a desired YS cannot be achieved. Furthermore, bendability may not be achieved.

Thus, the tempering temperature is preferably more than 300°C, more preferably more than 320°C.

Tempering time (holding time) in reheating temperature range: 10 seconds or more and 2000 seconds or less

A tempering time (holding time) of less than 10 seconds in the reheating temperature range results in insufficient tempering of martensite present in the steel at the end of the cooling step and an excessive increase in fresh martensite. This may also result in insufficient coarsening of carbide in tempered martensite and a density of carbide in the tempered martensite higher than a predetermined level. Consequently, a desired YS may not be achieved. This also results in a decrease in YR. Furthermore, bendability may not be achieved.

On the other hand, a tempering time (holding time) of more than 2000 seconds in the reheating temperature range results in excessive tempering of martensite present in the steel at the end of the cooling step and makes it difficult to achieve a TS of 1180 MPa or more. This also results in a decrease in ductility because non-transformed austenite present in the steel at the end of the second cooling step is decomposed as carbide (pearlite). Thus, the tempering time (holding time) in the reheating temperature range is 10 seconds or more and 2000 seconds or less. The tempering time is preferably 20 seconds or more, more preferably 30 seconds or more. The tempering time is preferably 1000 seconds or less, more preferably 900 seconds or less.

The tempering time (holding time) in the reheating temperature range includes, in addition to the holding time at the reheating temperature, the residence time in the temperature range in heating and cooling before and after reaching the reheating temperature.

The cooling conditions after holding in the reheating temperature range are not particularly limited and may be based on a usual method. The cooling method is, for example, gas jet cooling, mist cooling, roll cooling, water cooling, natural cooling, or the like. From the perspective of preventing surface oxidation, after holding in the reheating temperature range, cooling to 50°C or less is preferred, and cooling to approximately room temperature is more preferred. The average cooling rate in cooling after holding in the reheating temperature range is preferably, for example, 1°C/s or more. The average cooling rate is preferably 50°C/s or less.

(Galvanizing Step (Electrogalvanizing Step))

After cooling to room temperature, an electrogalvanizing treatment may be performed. A steel sheet can be subjected to an electrogalvanizing treatment to produce an electrogalvanized steel sheet. When the surface of the steel sheet is subjected to electrogalvanizing, the treatment conditions of the electrogalvanizing treatment are not particularly limited and may be based on a usual method.

Furthermore, the steel sheet thus produced may be further subjected to temper rolling. A rolling reduction of more than 2.00% in the temper rolling may result in an increase in yield stress and a decrease in dimensional accuracy when the steel sheet is formed into a member. Thus, the rolling reduction of the temper rolling is preferably 2.00% or less. The lower limit of the rolling reduction in the temper rolling is preferably, but not limited to, 0.05% or more from the perspective of productivity. The temper rolling may be performed with an apparatus coupled to an annealing apparatus for each step (on-line) or with an apparatus separated from the annealing apparatus for each step (off-line). The number of times of temper rolling may be one or two or more. Provided that the elongation percentage can be similar to that of temper rolling, rolling with a leveler or the like may be used.

Conditions other than those described above are not particularly limited and may be based on a usual method.

[3. Member]

Next, a member according to an embodiment of the present invention will be described.

A member according to an embodiment of the present invention is a member produced by using the steel sheet described above (as a material). For example, the steel sheet as a material is subjected to at least one of forming or joining to produce a member.

The steel sheet has a TS of 1180 MPa or more, a high YS, a high YR, high ductility, a high bendability, and good energy absorption characteristics. Thus, a member according to an embodiment of the present invention has high strength and good anti-crash properties. Thus, a member according to an embodiment of the present invention is particularly suitable for application to an impact energy absorbing member used in the automotive field.

[4. Method for Producing Member]

Next, a method for producing a member according to an embodiment of the present invention will be described.
A method for producing a member according to an embodiment of the present invention includes a step of subjecting the steel sheet (for example, a steel sheet produced by the method for producing a steel sheet) to at least one of forming or joining to produce a member.
The forming method may be, but is not limited to, for example, a typical processing method, such as press forming. Furthermore, the joining method may be, but is not limited to, for example, typical welding, such as spot welding, laser welding, or arc welding, riveting, caulking, or the like. The forming conditions and the joining conditions are not particularly limited and may be based on a usual method.

EXAMPLES

A steel material with a chemical composition shown in Table 1 (the remainder was composed of Fe and incidental impurities) was melted in a converter and was formed into a steel slab by a continuous casting method. In Table 1, "-" indicates the incidental impurity level content.
The steel slab was heated to 1200°C and, after the heating, was subjected to hot rolling composed of rough rolling and finish rolling at a finish rolling temperature of 900°C to form a hot-rolled steel sheet. Except for No. 67, the hot-rolled steel sheet was then subjected to pickling and cold rolling (rolling reduction: 50%) to form a cold-rolled steel sheet with the thickness shown in Table 3.
The cold-rolled steel sheet was then subjected to treatments in an annealing step, a rapid heating step, a cooling step, a galvanizing step, and a reheating and holding step under the conditions shown in Table 2 to form a steel sheet (galvanized steel sheet).
For No. 66, the treatment in the holding step was performed after the rapid heating step and before the cooling step. The conditions in the holding step were a holding temperature of 480°C and a holding time of 60 seconds.
In the galvanizing step, a hot-dip galvanizing treatment, a galvannealing treatment, or an electrogalvanizing treatment was performed to produce a hot-dip galvanized steel sheet (hereinafter also referred to as GI), a hot-dip galvannealed steel sheet (hereinafter also referred to as GA), or an electrogalvanized steel sheet (hereinafter also referred to as EG).
The hot-dip galvanizing treatment and the galvannealing treatment were performed after the cooling step and before the reheating and holding step, and the electrogalvanizing treatment was performed after the reheating and holding step. In Table 2, the types of galvanizing steps are also indicated as "GI", "GA", and "EG". In the GI and EG steel sheets in Table 2, no alloying treatment is performed, and the alloying temperature is indicated by "-". In Table 2, a cold-rolled steel sheet produced without the galvanizing treatment in the galvanizing step is indicated as "CR".
The galvanizing bath temperature was 470°C in the production of EG, GI, and GA.
The galvanized coating weight ranged from 10 to 100 g/m$^2$ when EG was produced. The galvanized coating weight ranged from 45 to 72 g/m$^2$ per side to produce GI and was 45 g/m$^2$ per side to produce GA.
The composition of the galvanized layer of the final galvanized steel sheet in GI contained Fe: 0.1% to 1.0% by mass and Al: 0.2% to 0.33% by mass, and the remainder was composed of Zn and incidental impurities. GA contained Fe: 8.0% to 12.0% by mass and Al: 0.1% to 0.23% by mass, and the remainder was composed of Zn and incidental impurities. EG contained Ni: 9.0% to 25.0% by mass, and the remainder was composed of Zn and incidental impurities.
In each case, the galvanized layer was formed on both surfaces of the base steel sheet.
In the steel sheets thus produced, the steel microstructure of the base steel sheet was identified in the above-described manner. Table 3 shows the measurement results. In Table 3, F represents ferrite, BF represents bainitic ferrite, TM represents tempered martensite, RA represents retained austenite, FM represents fresh martensite, LB represents lower bainite, and θ represents carbide.
In accordance with the above-described procedure, the surface layer in which the total area fraction of the non-ferrite microstructure was 1/2 or less of that at the quarter thickness position was defined as the surface soft layer.
A tensile test and a VDA bending test were performed according to the following procedures, and the tensile strength (TS), the yield stress (YS), the yield ratio (YR), the total elongation (El), the critical bending angle (α) in the VDA bending test, the bending deformation absorbed energy amount, and the production efficiency (E) were evaluated according to the following criteria.
-    TS

O (acceptable): 1180 MPa or more and less than 1470 MPa
X (fail): less than 1180 MPa or 1470 MPa or more

- YS

O (acceptable):

(A) For 1180 MPa $\leq$ TS < 1320 MPa, 750 MPa $\leq$ YS
(B) For 1320 MPa $\leq$ TS, 850 MPa $\leq$ YS

X (fail):

(A) For 1180 MPa $\leq$ TS < 1320 MPa, 750 MPa > YS
(B) For 1320 MPa $\leq$ TS, 850 MPa > YS

- YR

O (acceptable): 0.70 or more
X (fail): less than 0.70

- El

O (acceptable):

(A) For 1180 MPa $\leq$ TS < 1320 MPa, 11.0% $\leq$ El
(B) For 1320 MPa $\leq$ TS, 9.0% $\leq$ El

X (fail):

(A) For 1180 MPa $\leq$ TS < 1320 MPa, 11.0% > El
(B) For 1320 MPa $\leq$ TS, 9.0% > El

- $\alpha$

O (acceptable): 80 degrees or more
X (fail): less than 80 degrees

- AE

O (acceptable): the integral value in a load-stroke curve is 70000 N·mm or more

X (acceptable): the integral value in a load-stroke curve is less than 70000 N·mm

- Production efficiency E (ton/h) = LS x t x W x $\rho$ x 60 x 10-6

Acceptable (A): 16.0 < E < 190.0

Acceptable (B): 3.0 < E ≤ 16.0, or 190.0 ≤ E < 390.0
Acceptable (C): 3.0 ≥ E or E ≥ 390.0

wherein

LS: line speed (m/min) in annealing step
t: sheet thickness (mm)
W: sheet width (mm)
$\rho$: specific gravity of iron (ton/m$^3$), $\rho$ = 7.86 (ton/m$^3$).

(1) Tensile Test
The tensile test was performed in accordance with JIS Z 2241 (2011). More specifically, a JIS No. 5 specimen was taken from a steel sheet thus produced such that the longitudinal direction was perpendicular to the rolling direction of the base steel sheet. A tensile test was performed on the test specimen at a crosshead speed of 10 mm/min to measure TS, YS, and El. Table 4 shows the results.

(2) VDA Bending Test
The VDA bending test was performed in a bending test according to the VDA standard (VDA 238-100) defined by the German Association of the Automotive Industry.

More specifically, a 70 mm x 60 mm test specimen was taken by shearing from a steel sheet thus produced. A 60-mm side is parallel to the rolling (L) direction.

The test specimen was subjected to the VDA bending test under the following conditions.

Test method: roll support, punch pressing

Roll diameter: φ30 mm
Punch tip R: 0.4 mm
Distance between rolls: (sheet thickness x 2) + 0.5 mm
Stroke speed: 20 mm/min
Bending direction: a (C) direction perpendicular to the rolling direction

When the load F applied with a press bending jig from above reaches the maximum, the angle on the outside of a bend at the central portion of a plate-like test specimen is measured as a bending angle (critical bending angle) (degree). Furthermore, a load-stroke curve thus obtained is used to calculate an integral value (absorbed energy) of the load-stroke curve up to the maximum load. The VDA bending test is performed three times, and the average value of the critical bending angle at the maximum load and the average value of the integral value (absorbed energy) of the load-stroke curve are defined as $\alpha$ (degree) and AE, respectively. Table 4 shows the results.

The VDA bending test of a steel sheet with a thickness of more than 1.2 mm was all performed on a steel sheet with a thickness of 1.2 mm in consideration of the influence of the sheet thickness. A steel sheet with a thickness of more than 1.2 mm was ground on one side to have a thickness of 1.2 mm. Since the bendability of the surface of the steel sheet may be affected by grinding, the ground surface was on the inside of the bend (the side in contact with the punch) in the VDA bending test.

On the other hand, in the VDA bending test of a steel sheet with a thickness of less than 1.2 mm, the sheet thickness has a small influence, and the test was performed without the grinding treatment.

[Table 1]

| Steel grade Steel grade | Chemic al composition (% by mass) | | | | | | | | Notes |
|---|---|---|---|---|---|---|---|---|---|
| | C | Si | Mn | P | S | Al | N | Others | |
| A | 0.178 | 1.14 | 2.77 | 0.016 | 0.0021 | 0.029 | 0.0046 | - | Conforming steel |
| B | 0.145 | 1.0 | 3.08 | 0.018 | 0.0009 | 0.021 | 0.0047 | - | Conforming steel |
| C | 0.302 | 0.93 | 3.01 | 0.012 | 0.0022 | 0.037 | 0.0045 | - | Conformina steel |
| D | 0.150 | 0.45 | 2.58 | 0.019 | 0.0008 | 0.029 | 0.0031 | - | Conforming steel |

(continued)

| Steel grade Steel grade | Chemic al composition (% by mass) | | | | | | | | Notes |
|---|---|---|---|---|---|---|---|---|---|
| | C | Si | Mn | P | S | Al | N | Others | |
| E | 0.211 | 2.19 | 2.68 | 0.011 | 0.0015 | 0.020 | 0.0026 | - | Conforming steel |
| F | 0.179 | 1.10 | 2.44 | 0.016 | 0.0021 | 0.035 | 0.0050 | - | Conforming steel |
| G | 0.135 | 1.02 | 3.18 | 0.012 | 0.0016 | 0.033 | 0.0042 | - | Conforming steel |
| H | 0.406 | 1.28 | 3.04 | 0.017 | 0.0011 | 0.038 | 0.0043 | - | Comparative steel |
| I | 0.047 | 1.67 | 2.79 | 0.021 | 0.0013 | 0.024 | 0.0024 | - | Comparative steel |
| J | 0.185 | 0.11 | 2.90 | 0.017 | 0.0014 | 0.033 | 0.0027 | - | Comparative steel |
| K | 0.152 | 3.29 | 2.62 | 0.018 | 0.0008 | 0.016 | 0.0039 | - | Comparative steel |
| L | 0.200 | 1.07 | 0.96 | 0.022 | 0.0020 | 0.025 | 0.0026 | - | Comparative steel |
| M | 0.220 | 0.91 | 3.60 | 0.016 | 0.0008 | 0.028 | 0.0047 | - | Comparative steel |
| N | 0.202 | 1.10 | 3.10 | 0.014 | 0.0023 | 0.016 | 0.0022 | Ti: 0.021 | Conforming steel |
| O | 0.154 | 1.24 | 2.82 | 0.022 | 0.0025 | 0.027 | 0.0031 | Nb: 0.027 | Conforming steel |
| P | 0.199 | 1.44 | 2.84 | 0.014 | 0.0021 | 0.036 | 0.0031 | V: 0.042 | Conforming steel |
| Q | 0.186 | 1.54 | 2.85 | 0.019 | 0.0015 | 0.036 | 0.0045 | Ti: 0.020, B: 0.0014 | Conformina steel |
| R | 0.176 | 1.04 | 2.78 | 0.018 | 0.0024 | 0.034 | 0.0021 | Ti: 0.025, B: 0.0021 | Conforming steel |
| S | 0.180 | 1.27 | 2.84 | 0.011 | 0.0021 | 0.032 | 0.0043 | Ti: 0.016, Nb: 0.025, B: 0.0018 | Conforming steel |
| T | 0.138 | 1.01 | 3.14 | 0.014 | 0.0011 | 0.011 | 0.0031 | Ti: 0.016, Nb: 0.025, B: 0.0018 | Conformina steel |
| U | 0.196 | 1.29 | 3.18 | 0.018 | 0.0011 | 0.024 | 0.0038 | Cu: 0.151 | Conforming steel |
| V | 0.152 | 1.49 | 2.79 | 0.012 | 0.0016 | 0.035 | 0.0024 | Cr: 0.058 | Conforming steel |
| W | 0.171 | 1.68 | 3.10 | 0.019 | 0.0018 | 0.012 | 0.0037 | Ni: 0.114 | Conforming steel |
| X | 0.177 | 1.13 | 3.19 | 0.018 | 0.0012 | 0.027 | 0.0050 | Mo: 0.033 | Conforming steel |
| Y | 0.181 | 1.26 | 2.91 | 0.016 | 0.0025 | 0.012 | 0.0028 | Sb: 0.009 | Conforming steel |

(continued)

| Steel grade Steel grade | Chemic al composition (% by mass) | | | | | | | | Notes |
|---|---|---|---|---|---|---|---|---|---|
| | C | Si | Mn | P | S | Al | N | Others | |
| Z | 0.190 | 0.81 | 2.73 | 0.017 | 0.0022 | 0.033 | 0.0032 | Sn: 0.011 | Conforming steel |
| AA | 0.215 | 1.10 | 2.99 | 0.020 | 0.0017 | 0.024 | 0.0040 | Nb: 0.019, Ta: 0.008 | Conforming steel |
| AB | 0.191 | 1.69 | 3.15 | 0.015 | 0.0005 | 0.031 | 0.0036 | Ta: 0.009 | Conforming steel |
| AC | 0.187 | 1.00 | 2.90 | 0.014 | 0.0012 | 0.013 | 0.0029 | W: 0.036 | Conformina steel |
| AD | 0.159 | 1.09 | 2.92 | 0.018 | 0.0014 | 0.038 | 0.0032 | Mg: 0.0054 | Conforming steel |
| AE | 0.184 | 1.15 | 2.71 | 0.017 | 0.0005 | 0.015 | 0.0029 | Zn: 0.0058 | Conforming steel |
| AF | 0.194 | 1.52 | 2.65 | 0.016 | 0.0013 | 0.014 | 0.0049 | Co: 0.0076 | Conforming steel |
| AG | 0.183 | 1.36 | 2.87 | 0.017 | 0.0025 | 0.010 | 0.0038 | Zr: 0.0031 | Conforming steel |
| AH | 0.205 | 1.22 | 3.20 | 0.012 | 0.0010 | 0.040 | 0.0042 | Ca: 0.0011 | Conforming steel |
| AI | 0.161 | 1.08 | 3.15 | 0.013 | 0.0005 | 0.038 | 0.0034 | Se: 0.0088 | Conforming steel |
| AJ | 0.152 | 1.53 | 2.67 | 0.010 | 0.0023 | 0.013 | 0.0024 | Te: 0.0105 | Conforming steel |
| AK | 0.204 | 1.30 | 2.82 | 0.017 | 0.0015 | 0.028 | 0.0045 | Ge: 0.0099 | Conforming steel |
| AL | 0.195 | 1.67 | 2.90 | 0.023 | 0.0019 | 0.032 | 0.0032 | As: 0.0248 | Conforming steel |
| AM | 0.218 | 1.68 | 2.99 | 0.013 | 0.0015 | 0.016 | 0.0027 | Sr: 0.0091 | Conforming steel |
| AN | 0.177 | 1.26 | 3.13 | 0.011 | 0.0020 | 0.011 | 0.0022 | Cs: 0.0125 | Conforming steel |
| AO | 0.156 | 1.18 | 3.06 | 0.019 | 0.0020 | 0.035 | 0.0043 | Hf: 0.0062 | Conforming steel |
| AP | 0.167 | 1.12 | 2.98 | 0.015 | 0.0020 | 0.033 | 0.0047 | Pb: 0.0101 | Conforming steel |
| AQ | 0.180 | 1.09 | 2.87 | 0.018 | 0.0011 | 0.037 | 0.0024 | Bi: 0.0027 | Conforming steel |
| AR | 0.170 | 1.34 | 2.93 | 0.012 | 0.0022 | 0.021 | 0.0036 | REM: 0.0036 | Conforming steel |

(continued)

| Steel grade Steel grade | Chemic al composition (% by mass) | | | | | | | | Notes |
|---|---|---|---|---|---|---|---|---|---|
| | C | Si | Mn | P | S | Al | N | Others | |
| AS | 0.198 | 1.23 | 2.67 | 0.010 | 0.0013 | 0.032 | 0.0023 | Nb: 0.180, Ti: 0.190, V: 0.170, B: 0.0085, Cr: 0.950, Ni: 0.960, Mo: 0.950, Sb: 0.190, Sn: 0.170, Cu: 0.900, Ta: 0.095, W: 0.450, Mg: 0.0170, Zn: 0.0180, Co: 0.0180, Zr: 0.0920, Ca: 0.0180, Se: 0.0190, Te: 0.0185, Ge: 0.0180, As: 0.0400, Sr: 0.0180, Cs: 0.0185, Hf: 0.0185, Pb: 0.0180, Bi: 0.0190, REM: 0.0180 | Conforming steel |
| - the remainder other than the chemical composition is composed of Fe and incidental impurities. | | | | | | | | | |

[Table 2-1]

| No. | Steel grade | Sheet thickness t (mm) (*1) | Sheet width W (mm) (*1) | Presence or absence of cold rolling | Annealing step | | | | | | Rapid heating step | | Galvanizing step | | Cooling step | Reheating and holding step | | Production efficiency | | Notes |
|---|---|---|---|---|---|---|---|---|---|---|---|---|---|---|---|---|---|---|---|---|
| | | | | | Formula (1) left side (*1) | Line speed LS (mpm) | Formula (1) right side (*2) | Annealing temperature (°C) | Holding time (s) | Dew-point temperature (°C) | Heating rate (°C/s) | Final temperature (°C) | Type (*3) | Alloying temperature (°C) | Cooling stop temperature (°C) | Tempering temperature (°C) | Tempering time (holding time) (s) | E (ton/h)(*4) | Rating | |
| 1 | A | 1.0 | 1020 | Present | 6.2 | 70.0 | 810.8 | 800 | 90 | 0 | 60 | 860 | GA | 500 | 190 | 380 | 50 | 33.7 | A | Inventive example |
| 2 | B | 1.4 | 930 | Present | 4.9 | 100.0 | 635.2 | 810 | 80 | 10 | 70 | 880 | GA | 490 | 180 | 370 | 60 | 61.4 | A | Inventive example |
| 3 | C | 1.2 | 1290 | Present | 4.1 | 80.0 | 534.2 | 770 | 100 | 15 | 80 | 850 | GA | 460 | 120 | 300 | 100 | 58.4 | A | Inventive example |
| 4 | D | 1.0 | 1090 | Present | 5.8 | 120.0 | 758.7 | 790 | 60 | 20 | 100 | 870 | GA | 500 | 210 | 380 | 70 | 61.7 | A | Inventive example |
| 5 | E | 1.4 | 1290 | Present | 3.5 | 110.0 | 457.9 | 830 | 60 | 5 | 50 | 900 | GA | 460 | 160 | 330 | 30 | 93.7 | A | Inventive example |
| 6 | F | 1.0 | 1260 | Present | 5.0 | 110.0 | 656.3 | 810 | 70 | 5 | 60 | 870 | GA | 500 | 200 | 390 | 110 | 65.4 | A | Inventive example |
| 7 | G | 1.0 | 990 | Present | 6.4 | 120.0 | 835.3 | 800 | 60 | 15 | 80 | 860 | GI | - | 190 | 360 | 30 | 56.0 | A | Inventive example |
| 8 | H | 1.0 | 1210 | Present | 5.3 | 90.0 | 683.4 | 760 | 70 | -10 | 60 | 820 | GA | 460 | 170 | 240 | 100 | 51.4 | A | Comparative example |
| 9 | I | 1.2 | 990 | Present | 5.4 | 80.0 | 696.1 | 840 | 80 | 10 | 100 | 900 | GA | 490 | 250 | 430 | 100 | 44.8 | A | Comparative example |
| 10 | J | 1.2 | 1110 | Present | 4.8 | 90.0 | 620.8 | 770 | 70 | -10 | 60 | 830 | GA | 490 | 200 | 370 | 70 | 56.5 | A | Comparative example |
| 11 | K | 1.4 | 1280 | Present | 3.5 | 80.0 | 461.5 | 850 | 100 | 5 | 90 | 920 | GI | - | 210 | 410 | 60 | 67.6 | A | Comparative example |
| 12 | L | 1.4 | 950 | Present | 4.8 | 100.0 | 621.8 | 820 | 80 | -5 | 100 | 870 | GI | - | 270 | 460 | 60 | 62.7 | A | Comparative example |
| 13 | M | 1.2 | 1090 | Present | 4.9 | 70.0 | 632.2 | 780 | 110 | 0 | 90 | 860 | GA | 500 | 120 | 300 | 60 | 43.2 | A | Comparative example |
| 14 | A | 1.4 | 1180 | Present | 3.9 | 120.0 | 500.6 | 700 | 50 | -5 | 90 | 870 | GA | 460 | 190 | 390 | 90 | 93.5 | A | Comparative example |
| 15 | A | 1.0 | 1050 | Present | 6.1 | 90.0 | 787.6 | 900 | 80 | 0 | 30 | 910 | GA | 500 | 180 | 380 | 70 | 44.6 | A | Comparative example |
| 16 | A | 1.0 | 970 | Present | 6.6 | 70.0 | 852.5 | 790 | 10 | 15 | 90 | 850 | GA | 480 | 200 | 400 | 80 | 32.0 | A | Comparative example |
| 17 | A | 1.4 | 970 | Present | 4.7 | 90.0 | 609.0 | 800 | 90 | -20 | 60 | 880 | GA | 540 | 200 | 370 | 40 | 57.6 | A | Comparative example |
| 18 | A | 1.2 | 1200 | Present | 4.4 | 120.0 | 574.3 | 810 | 70 | 20 | 5 | 870 | GA | 480 | 180 | 350 | 100 | 81.5 | A | Comparative example |
| 19 | A | 1.2 | 1150 | Present | 4.6 | 110.0 | 599.3 | 820 | 70 | -5 | 30 | 825 | GA | 460 | 180 | 380 | 30 | 71.6 | A | Comparative example |
| 20 | R | 1.0 | 1120 | Present | 5.7 | 80.0 | 738.4 | 780 | 80 | 5 | 100 | 830 | GA | 480 | 50 | 370 | 30 | 42.3 | A | Comparative example |
| 21 | R | 1.4 | 980 | Present | 4.6 | 70.0 | 602.7 | 800 | 110 | 15 | 80 | 870 | GI | - | 310 | 400 | 60 | 45.3 | A | Comparative example |
| 22 | R | 1.0 | 950 | Present | 6.7 | 100.0 | 870.5 | 800 | 70 | 15 | 40 | 860 | GI | - | 180 | 500 | 60 | 44.8 | A | Comparative example |
| 23 | R | 1.0 | 1100 | Present | 5.8 | 80.0 | 751.8 | 790 | 100 | -5 | 30 | 870 | EG | - | 180 | 400 | 5 | 41.5 | A | Comparative example |
| 24 | R | 1.4 | 920 | Present | 4.9 | 80.0 | 642.1 | 790 | 80 | 20 | 50 | 870 | EG | - | 200 | 390 | 2500 | 48.6 | A | Comparative example |
| 25 | N | 1.0 | 1020 | Present | 6.2 | 90.0 | 810.8 | 790 | 90 | 15 | 30 | 850 | GA | 460 | 170 | 360 | 110 | 43.3 | A | Inventive example |
| 26 | O | 1.4 | 1240 | Present | 3.7 | 100.0 | 476.4 | 800 | 70 | 5 | 50 | 880 | GA | 500 | 190 | 370 | 100 | 81.9 | A | Inventive example |
| 27 | P | 1.0 | 1140 | Present | 5.6 | 80.0 | 725.4 | 810 | 90 | 15 | 50 | 860 | GI | - | 160 | 330 | 30 | 43.0 | A | Inventive example |
| 28 | Q | 1.0 | 940 | Present | 6.8 | 110.0 | 879.8 | 810 | 50 | -10 | 70 | 880 | EG | - | 170 | 340 | 40 | 48.8 | A | Inventive example |
| 29 | R | 1.0 | 1190 | Present | 5.3 | 120.0 | 694.9 | 800 | 50 | 15 | 100 | 870 | GA | 500 | 200 | 400 | 60 | 67.3 | A | Inventive example |
| 30 | S | 1.0 | 1170 | Present | 5.4 | 100.0 | 706.8 | 780 | 80 | 0 | 50 | 840 | GA | 460 | 190 | 390 | 90 | 55.2 | A | Inventive example |

*1) Sheet thickness t, sheet width W: sheet thickness and sheet width after pickling step and before annealing step
*2) Formula (1): $3.0/(t \times W \times 4.716 \times 10^{-4}) < LS < 300.0/(t \times W \times 4.716 \times 10^{-4})$ (t: sheet thickness (mm), W: sheet width (mm))
*3) CR: without coating (cold-rolled steel sheet), EG: electrogalvanizing, GI: hot-dip galvanizing, GA: hot-dip galvannealed
*4) $E \text{ (ton/h)} = LS \times t \times W \times \rho \times 60 \times 10^{-6}$ (t: sheet thickness (mm), W: sheet width (mm), $\rho = 7.86$ (ton/m³))

[Table 2-2]

| No. | Steel grade | Sheet thickness t (mm) (*1) | Sheet width W (mm) (*1) | Presence or absence of cold rolling | Annealing step | | | | | | Rapid heating step | Galvanizing step | | | Cooling step | Reheating and holding step | | Production efficiency | | Notes |
|---|---|---|---|---|---|---|---|---|---|---|---|---|---|---|---|---|---|---|---|---|
| | | | | | Formula (1) left side (*1) | Line speed LS (mpm) | Formula (1) right side (*2) | Annealing temperature (°C) | Holding time (s) | Dew-point temperature (°C) | Heating rate (°C/s) | Final temperature (°C) | Type (*3) | Alloying temperature (°C) | Cooling stop temperature (°C) | Tempering temperature (°C) | Tempering time (holding time) (s) | F (ton/h)(*4) | Rating | |
| 31 | T | 1.2 | 980 | Present | 5.4 | 100 | 703.2 | 800 | 70 | 5 | 50 | 870 | GA | 460 | 200 | 380 | 60 | 55.5 | A | Inventive example |
| 32 | U | 1.0 | 1000 | Present | 6.4 | 110 | 827.0 | 800 | 70 | 20 | 30 | 850 | GA | 460 | 170 | 360 | 40 | 51.9 | A | Inventive example |
| 33 | V | 1.2 | 1070 | Present | 5.0 | 100 | 644.1 | 820 | 60 | 15 | 60 | 870 | GA | 500 | 210 | 380 | 30 | 60.6 | A | Inventive example |
| 34 | W | 1.0 | 990 | Present | 6.4 | 110 | 835.3 | 810 | 60 | 20 | 30 | 880 | GA | 500 | 180 | 360 | 60 | 51.4 | A | Inventive example |
| 35 | X | 1.0 | 1160 | Present | 5.5 | 70 | 712.9 | 780 | 90 | 0 | 30 | 860 | GI | - | 160 | 330 | 100 | 38.3 | A | Inventive example |
| 36 | Y | 1.0 | 1140 | Present | 5.6 | 90 | 725.4 | 810 | 70 | 5 | 30 | 860 | GA | 480 | 180 | 350 | 30 | 48.4 | A | Inventive example |
| 37 | Z | 1.2 | 1230 | Present | 4.3 | 80 | 560.3 | 780 | 90 | -5 | 90 | 850 | GA | 460 | 190 | 380 | 80 | 55.7 | A | Inventive example |
| 38 | AA | 1.4 | 1300 | Present | 3.5 | 80 | 454.4 | 780 | 100 | 0 | 30 | 840 | GA | 480 | 170 | 350 | 90 | 68.7 | A | Inventive example |
| 39 | AB | 1.2 | 1180 | Present | 4.5 | 120 | 584.0 | 810 | 70 | 10 | 40 | 880 | CR | - | 170 | 330 | 800 | 80.1 | A | Inventive example |
| 40 | AC | 1.2 | 1000 | Present | 5.3 | 110 | 689.1 | 780 | 60 | 10 | 90 | 860 | CR | - | 190 | 390 | 70 | 62.3 | A | Inventive example |
| 41 | AD | 1.4 | 1010 | Present | 4.5 | 100 | 584.8 | 800 | 80 | -10 | 30 | 870 | CR | - | 180 | 350 | 90 | 66.7 | A | Inventive example |
| 42 | AE | 1.0 | 1070 | Present | 5.9 | 110 | 772.9 | 810 | 50 | 15 | 90 | 860 | CR | - | 190 | 390 | 50 | 55.5 | A | Inventive example |
| 43 | AF | 1.4 | 1190 | Present | 3.8 | 110 | 496.4 | 800 | 70 | 0 | 100 | 850 | CR | - | 190 | 380 | 70 | 86.4 | A | Inventive example |
| 44 | AG | 1.2 | 1120 | Present | 4.7 | 100 | 615.3 | 810 | 60 | 15 | 80 | 890 | GA | 490 | 170 | 340 | 30 | 63.4 | A | Inventive example |
| 45 | AH | 1.0 | 1110 | Present | 5.7 | 120 | 745.0 | 780 | 70 | 15 | 70 | 830 | GA | 480 | 170 | 350 | 60 | 62.8 | A | Inventive example |
| 46 | AI | 1.0 | 1000 | Present | 6.4 | 90 | 827.0 | 800 | 70 | 5 | 50 | 880 | GA | 480 | 190 | 380 | 40 | 42.4 | A | Inventive example |
| 47 | AJ | 1.0 | 960 | Present | 6.6 | 90 | 861.4 | 810 | 80 | 15 | 70 | 880 | GI | - | 220 | 390 | 20 | 40.7 | A | Inventive example |
| 48 | AK | 1.0 | 1290 | Present | 4.9 | 70 | 641.1 | 810 | 90 | 15 | 80 | 870 | GA | 480 | 160 | 330 | 70 | 42.6 | A | Inventive example |
| 49 | AL | 1.0 | 1120 | Present | 5.7 | 100 | 738.4 | 820 | 60 | 0 | 30 | 890 | GA | 480 | 170 | 360 | 70 | 52.8 | A | Inventive example |
| 50 | AM | 1.4 | 1290 | Present | 3.5 | 70 | 457.9 | 800 | 100 | 15 | 30 | 870 | GI | - | 150 | 330 | 90 | 59.6 | A | Inventive example |
| 51 | AN | 1.0 | 960 | Present | 6.6 | 80 | 861.4 | 810 | 100 | 20 | 90 | 860 | GA | 500 | 160 | 350 | 50 | 36.2 | A | Inventive example |
| 52 | AO | 1.2 | 1100 | Present | 4.8 | 90 | 626.5 | 800 | 70 | 20 | 50 | 880 | GA | 500 | 190 | 360 | 30 | 56.0 | A | Inventive example |
| 53 | AP | 1.4 | 990 | Present | 4.6 | 110 | 596.7 | 810 | 70 | -5 | 90 | 890 | GA | 500 | 200 | 370 | 90 | 71.9 | A | Inventive example |
| 54 | AQ | 1.4 | 1050 | Present | 4.3 | 100 | 562.6 | 780 | 60 | 5 | 50 | 830 | GA | 460 | 180 | 380 | 110 | 69.3 | A | Inventive example |
| 55 | AR | 1.2 | 940 | Present | 5.6 | 70 | 733.1 | 790 | 110 | 5 | 70 | 860 | GA | 460 | 190 | 370 | 40 | 37.2 | A | Inventive example |
| 56 | Q | 0.9 | 560 | Present | 12.6 | 50 | 1640.8 | 800 | 140 | 10 | 40 | 880 | GA | 480 | 190 | 370 | 80 | 11.9 | B | Inventive example |
| 57 | Q | 0.9 | 580 | Present | 12.2 | 40 | 1584.2 | 850 | 140 | 10 | 60 | 920 | GA | 480 | 180 | 360 | 50 | 9.8 | B | Inventive example |
| 58 | Q | 1.4 | 990 | Present | 4.6 | 100 | 596.7 | 800 | 70 | 10 | 30 | 870 | GA | 490 | 180 | 380 | 50 | 65.4 | A | Inventive example |
| 59 | Q | 1.2 | 970 | Present | 5.5 | 100 | 710.5 | 850 | 70 | 10 | 50 | 930 | GA | 490 | 190 | 370 | 40 | 54.9 | A | Inventive example |
| 60 | Q | 0.9 | 510 | Present | 13.9 | 10 | 1801.7 | 860 | 350 | 10 | 50 | 910 | GA | 460 | 200 | 360 | 90 | 2.2 | C | Inventive example |
| 61 | Q | 1.4 | 1010 | Present | 4.5 | 30 | 584.8 | 870 | 250 | 10 | 60 | 900 | GA | 470 | 190 | 360 | 80 | 20.0 | A | Comparative example |
| 62 | AS | 1.0 | 1000 | Present | 6.4 | 70 | 827.0 | 840 | 180 | -5 | 30 | 900 | CR | - | 170 | 440 | 150 | 33.0 | A | Inventive example |
| 63 | C | 1.0 | 1080 | Present | 5.9 | 60 | 765.7 | 810 | 10 | 0 | 30 | 830 | CR | - | 310 | 380 | 120 | 30.6 | A | Comparative example |
| 64 | A | 1.4 | 810 | Present | 5.6 | 90 | 729.3 | 870 | 170 | 10 | 20 | 890 | GA | 500 | 190 | 500 | 90 | 48.1 | A | Comparative example |
| 65 | A | 1.8 | 1590 | Present | 2.2 | 300 | 288.9 | 860 | 80 | 15 | 20 | 930 | GI | - | 190 | 440 | 140 | 404.9 | C | Inventive example |
| 66 | A | 1.2 | 680 | Present | 7.8 | 110 | 1013.4 | 860 | 90 | -10 | 30 | 940 | GI | - | 250 | 430 | 130 | 42.3 | A | Inventive example |
| 67 | A | 2.4 | 710 | Absent | 3.7 | 100 | 485.3 | 860 | 90 | 15 | 20 | 960 | GA | 460 | 210 | 380 | 80 | 80.4 | A | Inventive example |

*1) Sheet thickness t, sheet width W: sheet thickness and sheet width after pickling step and before annealing step
*2) Formula (1): $3.0/(t \times W \times 4.716 \times 10^4) < LS < 390.0/(t \times W \times 4.716 \times 10^4)$ (t: sheet thickness (mm), W: sheet width (mm))
*3) CR: without coating (cold-rolled steel sheet), EG: electrogalvanizing, GI: hot-dip galvanizing, GA: hot-dip galvannealed
*4) E (ton/h) = $LS \times t \times W \times \rho \times 60 \times 10^{-6}$ (t: sheet thickness (mm), W: sheet width (mm), ρ = 7.86 (ton/m³)

[Table 3-1]

| No. | Steel grade | Steel microstructure (at quarter thickness position) | | | | | | | | Surface soft layer thickness (μm) | Notes |
|---|---|---|---|---|---|---|---|---|---|---|---|
| | | Area fraction of each phase (*1) | | | | | | Remainder microstructure | $L_{F-MA}/L_F$ (-) (*2) | | |
| | | F (%) | RA (%) | FM (%) | BF (%) | TM (%) | BF+TM (%) | | | | |
| 1 | A | 12.4 | 10.7 | 8.3 | 12.4 | 55.1 | 67.5 | LB, θ | 0.42 | 30 | Inventive example |
| 2 | B | 13.1 | 11.0 | 8.3 | 11.8 | 53.9 | 65.7 | LB, θ | 0.48 | 37 | Inventive example |
| 3 | C | 11.1 | 5.7 | 8.5 | 14.4 | 59.3 | 73.7 | θ | 0.27 | 39 | Inventive example |
| 4 | D | 12.8 | 5.2 | 8.9 | 14.0 | 57.1 | 71.1 | LB, θ | 0.25 | 60 | Inventive example |
| 5 | E | 15.5 | 9.0 | 8.8 | 10.9 | 55.8 | 66.7 | - | 0.05 | 43 | Inventive example |
| 6 | F | 13.6 | 6.7 | 8.6 | 12.2 | 57.1 | 69.3 | LB, θ | 0.14 | 53 | Inventive example |
| 7 | G | 13.4 | 13.6 | 8.9 | 13.4 | 50.7 | 64.1 | - | 0.42 | 55 | Inventive example |
| 8 | H | 1.4 | 9.2 | 16.5 | 16.0 | 55.2 | 71.2 | LB, θ | 0.07 | 32 | Comparative example |
| 9 | I | 25.8 | 14.1 | 8.4 | 9.5 | 42.3 | 51.7 | - | 0.10 | 46 | Comparative example |
| 10 | J | 11.6 | 2.5 | 8.9 | 15.0 | 58.1 | 73.2 | LB, θ | 0.16 | 25 | Comparative example |

(continued)

| No. | Steel grade | Steel microstructure (at quarter thickness position) | | | | | | | | Surface soft layer thickness (μm) | Notes |
|---|---|---|---|---|---|---|---|---|---|---|---|
| | | Area fraction of each phase (*1) | | | | | | Remainder microstructure | $L_{F\text{-}MA}/L_F$ (-) (*2) | | |
| | | F (%) | RA (%) | FM (%) | BF (%) | TM (%) | BF+TM (%) | | | | |
| 11 | K | 26.7 | 13.4 | 8.4 | 8.4 | 43.1 | 51.5 | - | 0.39 | 58 | Comparative example |
| 12 | L | 24.1 | 11.1 | 8.5 | 11.3 | 44.0 | 55.3 | θ | 0.21 | 34 | Comparative example |
| 13 | M | 11.0 | 5.4 | 18.1 | 13.3 | 52.2 | 65.5 | - | 0.44 | 32 | Comparative example |
| 14 | A | 30.7 | 13.5 | 17.7 | 1.3 | 36.9 | 38.2 | - | 0.82 | 28 | Comparative example |
| 15 | A | 0.0 | 8.8 | 5.9 | 1.6 | 83.7 | 85.3 | - | 0.17 | 10 | Comparative example |
| 16 | A | 24.1 | 10.1 | 10.8 | 14.5 | 40.5 | 55.0 | - | 0.72 | 27 | Comparative example |
| 17 | A | 12.4 | 13.2 | 8.3 | 12.4 | 52.4 | 64.8 | LB, θ | 0.08 | 7 | Comparative example |
| 18 | A | 21.7 | 10.3 | 8.7 | 4.3 | 53.0 | 57.4 | LB, θ | 0.76 | 60 | Comparative example |
| 19 | A | 8.7 | 9.0 | 8.7 | 17.3 | 55.1 | 72.5 | LB, θ | 0.79 | 33 | Comparative example |
| 20 | R | 12.3 | 2.2 | 2.0 | 14.8 | 66.8 | 81.6 | LB, θ | 0.14 | 47 | Comparative example |
| 21 | R | 12.0 | 5.6 | 18.0 | 12.0 | 50.9 | 62.9 | LB, θ | 0.45 | 53 | Comparative example |
| 22 | R | 13.1 | 2.8 | 0.0 | 13.1 | 70.3 | 83.4 | θ | 0.00 | 48 | Comparative example |
| 23 | R | 12.1 | 7.5 | 14.5 | 13.3 | 52.5 | 65.9 | - | 0.34 | 25 | Comparative example |
| 24 | R | 12.6 | 0.0 | 0.0 | 13.8 | 67.9 | 81.7 | θ | 0.00 | 38 | Comparative example |
| 25 | N | 12.1 | 6.8 | 8.5 | 13.4 | 57.2 | 70.6 | LB, θ | 0.36 | 50 | Inventive example |
| 26 | O | 13.3 | 8.1 | 8.9 | 13.3 | 56.4 | 69.7 | - | 0.06 | 58 | Inventive example |
| 27 | P | 13.0 | 12.6 | 8.2 | 11.7 | 53.4 | 65.2 | θ | 0.02 | 53 | Inventive example |
| 28 | Q | 14.3 | 5.7 | 9.1 | 12.9 | 56.7 | 69.6 | LB, θ | 0.29 | 31 | Inventive example |
| 29 | R | 13.6 | 12.6 | 9.1 | 13.6 | 51.1 | 64.7 | - | 0.08 | 58 | Inventive example |

(continued)

| No. | Steel grade | Steel microstructure (at quarter thickness position) | | | | | | | Surface soft layer thickness (μm) | Notes |
|---|---|---|---|---|---|---|---|---|---|---|
| | | Area fraction of each phase (*1) | | | | | | Remainder microstructure | $L_{F-MA}/L_F$ (-) (*2) | |
| | | F (%) | RA (%) | FM (%) | BF (%) | TM (%) | BF+TM (%) | | | |
| 30 | S | 12.3 | 5.7 | 9.0 | 14.8 | 56.3 | 71.1 | LB, θ | 0.40 | 31 | Inventive example |

*1) F: ferrite, RA: retained austenite, FM: fresh martensite, BF: bainitic ferrite, TM: tempered martensite, LB: lower bainite, θ: carbide
*2) $L_{F-MA}$: length of grain boundary in contact with MA microstructure on ferrite grain boundary, $L_F$: grain boundary length of ferrite

[Table 3-2]

| No. | Steel grade | Steel microstructure (at quarter thickness position) | | | | | | | Surface soft layer thickness (μm) | Notes |
|---|---|---|---|---|---|---|---|---|---|---|
| | | Area fraction of each phase (*1) | | | | | | Remainder microstructure | $L_{F-MA}/L_F$ (-) (*2) | |
| | | F (%) | RA (%) | FM (%) | BF (%) | TM (%) | BF+TM (%) | | | |
| 31 | T | 13.1 | 7.8 | 8.7 | 13.1 | 57.2 | 70.3 | - | 0.40 | 45 | Inventive example |
| 32 | U | 13.1 | 7.7 | 8.7 | 13.1 | 56.1 | 69.1 | LB, θ | 0.09 | 50 | Inventive example |
| 33 | V | 14.7 | 8.4 | 8.8 | 11.7 | 56.4 | 68.1 | - | 0.12 | 48 | Inventive example |
| 34 | W | 14.1 | 5.6 | 9.0 | 12.7 | 58.6 | 71.3 | - | 0.07 | 41 | Inventive example |
| 35 | X | 12.1 | 10.8 | 8.9 | 14.6 | 51.8 | 66.4 | LB, θ | 0.26 | 27 | Inventive example |
| 36 | Y | 13.5 | 5.9 | 8.6 | 12.2 | 59.8 | 72.0 | - | 0.37 | 51 | Inventive example |
| 37 | Z | 11.9 | 11.7 | 8.7 | 14.3 | 53.3 | 67.6 | - | 0.30 | 34 | Inventive example |
| 38 | AA | 11.8 | 14.7 | 8.7 | 14.2 | 50.6 | 64.8 | - | 0.20 | 25 | Inventive example |
| 39 | AB | 13.8 | 6.0 | 8.7 | 12.4 | 57.3 | 69.7 | LB, θ | 0.46 | 54 | Inventive example |
| 40 | AC | 12.6 | 8.9 | 9.2 | 15.1 | 52.4 | 67.5 | LB, θ | 0.22 | 53 | Inventive example |
| 41 | AD | 12.9 | 5.8 | 8.6 | 12.9 | 59.8 | 72.7 | - | 0.44 | 25 | Inventive example |
| 42 | AE | 14.2 | 5.7 | 9.0 | 12.7 | 57.1 | 69.9 | LB, θ | 0.00 | 54 | Inventive example |
| 43 | AF | 13.4 | 15.0 | 8.9 | 13.4 | 47.3 | 60.7 | LB, θ | 0.24 | 35 | Inventive example |
| 44 | AG | 13.9 | 13.0 | 8.8 | 12.5 | 51.7 | 64.2 | - | 0.38 | 54 | Inventive example |
| 45 | AH | 12.4 | 10.9 | 9.1 | 14.9 | 51.2 | 66.1 | LB, θ | 0.30 | 50 | Inventive example |

(continued)

| No. | Steel grade | Steel microstructure (at quarter thickness position) | | | | | | | | Surface soft layer thickness (μm) | Notes |
|---|---|---|---|---|---|---|---|---|---|---|---|
| | | Area fraction of each phase (*1) | | | | | | Remainder microstructure | $L_{F-MA}/L_F$ (-) (*2) | | |
| | | F (%) | RA (%) | FM (%) | BF (%) | TM (%) | BF+TM (%) | | | | |
| 46 | AI | 13.1 | 14.7 | 8.7 | 13.1 | 50.5 | 63.5 | - | 0.22 | 38 | Inventive example |
| 47 | AJ | 13.7 | 7.0 | 8.7 | 12.3 | 56.8 | 69.1 | LB, θ | 0.16 | 54 | Inventive example |
| 48 | AK | 12.8 | 10.3 | 8.1 | 11.5 | 55.7 | 67.3 | LB, θ | 0.48 | 40 | Inventive example |
| 49 | AL | 14.6 | 14.9 | 8.7 | 11.7 | 50.1 | 61.8 | - | 0.05 | 26 | Inventive example |
| 50 | AM | 12.6 | 8.2 | 8.4 | 12.6 | 58.2 | 70.8 | - | 0.31 | 47 | Inventive example |
| 51 | AN | 12.5 | 10.3 | 7.9 | 11.2 | 58.1 | 69.3 | - | 0.48 | 38 | Inventive example |
| 52 | AO | 13.2 | 10.0 | 8.8 | 13.2 | 54.8 | 68.0 | - | 0.05 | 44 | Inventive example |
| 53 | AP | 13.5 | 12.0 | 8.5 | 12.1 | 52.3 | 64.4 | LB, θ | 0.17 | 30 | Inventive example |
| 54 | AQ | 12.7 | 10.0 | 9.3 | 15.2 | 52.9 | 68.1 | - | 0.43 | 52 | Inventive example |
| 55 | AR | 12.2 | 7.4 | 8.6 | 13.4 | 56.7 | 70.1 | LB, θ | 0.46 | 52 | Inventive example |
| 56 | Q | 12.9 | 8.0 | 4.5 | 14.9 | 54.6 | 69.5 | LB, θ | 0.30 | 55 | Inventive example |
| 57 | Q | 13.8 | 8.3 | 3.9 | 13.5 | 54.6 | 68.1 | LB, θ | 0.25 | 46 | Inventive example |
| 58 | Q | 15.7 | 10.1 | 3.1 | 14.9 | 51.4 | 66.3 | LB, θ | 0.34 | 43 | Inventive example |
| 59 | Q | 12.8 | 10.7 | 5.8 | 15.3 | 50.8 | 66.1 | LB, θ | 0.16 | 36 | Inventive example |
| 60 | Q | 12.3 | 8.4 | 5.6 | 12.7 | 56.1 | 68.8 | LB, θ | 0.16 | 27 | Inventive example |
| <u>61</u> | Q | 15.0 | 8.4 | 5.1 | 15.0 | 50.5 | 65.5 | LB, θ | 0.23 | <u>18</u> | Comparative example |
| 62 | AS | 15.7 | 8.0 | 9.6 | 10.5 | 54.2 | 64.7 | θ | 0.40 | 37 | Inventive example |
| <u>63</u> | C | <u>28.1</u> | <u>16.5</u> | <u>16.7</u> | 0.0 | 38.7 | <u>38.7</u> | - | 0.36 | 51 | Comparative example |
| <u>64</u> | A | 0.0 | <u>0.0</u> | 0.0 | 12.8 | 86.2 | <u>99.0</u> | θ | 0.32 | <u>12</u> | Comparative example |
| 65 | A | 10.2 | 10.0 | 6.4 | 17.7 | 54.0 | 71.7 | LB, θ | 0.37 | 20 | Inventive example |
| 66 | A | 8.9 | 13.4 | 2.2 | 27.2 | 46.3 | 73.5 | θ | 0.41 | 47 | Inventive example |

(continued)

| No. | Steel grade | Steel microstructure (at quarter thickness position) | | | | | | | Remainder microstructure | $L_{F-MA}/L_F$ (-) (*2) | Surface soft layer thickness ($\mu$m) | Notes |
|---|---|---|---|---|---|---|---|---|---|---|---|---|
| | | Area fraction of each phase (*1) | | | | | | | | | | |
| | | F (%) | RA (%) | FM (%) | BF (%) | TM (%) | BF+TM (%) | | | | | |
| 67 | A | 16.6 | 7.8 | 5.5 | 15.1 | 53.6 | 68.7 | | $\theta$ | 0.37 | 29 | Inventive example |

*1) F: ferrite, RA: retained austenite, FM: fresh martensite, BF: bainitic ferrite, TM: tempered martensite, LB: lower bainite, $\theta$: carbide
*2) $L_{F-MA}$: length of grain boundary in contact with MA microstructure on ferrite grain boundary, $L_F$: grain boundary length of ferrite

[Table 4-1]

| No. | Steel grade | Tensile test | | | | VDA bending test | | Notes |
|---|---|---|---|---|---|---|---|---|
| | | YS | YR | TS | EI | $\alpha$ | AE | |
| | | (MPa) | (-) | (MPa) | (%) | (degree) | (N·mm) | |
| 1 | A | 1032 | 0.82 | 1257 | 12.1 | 99 | 79547 | Inventive example |
| 2 | B | 1036 | 0.85 | 1219 | 12.2 | 108 | 86004 | Inventive example |
| 3 | C | 1088 | 0.89 | 1226 | 12.1 | 110 | 87849 | Inventive example |
| 4 | D | 915 | 0.77 | 1193 | 12.6 | 134 | 107220 | Inventive example |
| 5 | E | 1038 | 0.80 | 1299 | 12.9 | 114 | 91538 | Inventive example |
| 6 | F | 940 | 0.78 | 1199 | 12.5 | 126 | 100763 | Inventive example |
| 7 | G | 1100 | 0.83 | 1331 | 10.7 | 128 | 102608 | Inventive example |
| 8 | H | 1075 | 0.69 | 1550 | 12.5 | 72 | 71391 | Comparative example |
| 9 | I | 749 | 0.64 | 1170 | 15.6 | 118 | 80240 | Comparative example |
| 10 | J | 967 | 0.76 | 1270 | 9.4 | 94 | 74934 | Comparative example |
| 11 | K | 746 | 0.66 | 1134 | 12.7 | 112 | 89600 | Comparative example |
| 12 | L | 708 | 0.63 | 1120 | 12.4 | 104 | 83236 | Comparative example |
| 13 | M | 933 | 0.67 | 1386 | 11.8 | 79 | 73100 | Comparative example |
| 14 | A | 704 | 0.63 | 1123 | 17.4 | 97 | 77702 | Comparative example |
| 15 | A | 1166 | 0.90 | 1301 | 11.0 | 76 | 61098 | Comparative example |
| 16 | A | 780 | 0.66 | 1176 | 13.3 | 96 | 76779 | Comparative example |
| 17 | A | 992 | 0.82 | 1214 | 12.1 | 78 | 66779 | Comparative example |
| 18 | A | 808 | 0.68 | 1189 | 13.6 | 114 | 91200 | Comparative example |
| 19 | A | 817 | 0.66 | 1233 | 11.8 | 103 | 82314 | Comparative example |
| 20 | R | 1013 | 0.82 | 1234 | 10.6 | 119 | 95228 | Comparative example |
| 21 | R | 815 | 0.66 | 1236 | 11.8 | 126 | 100763 | Comparative example |
| 22 | R | 1007 | 0.89 | 1131 | 10.5 | 120 | 96151 | Comparative example |
| 23 | R | 804 | 0.65 | 1235 | 12.2 | 84 | 70934 | Comparative example |
| 24 | R | 951 | 0.92 | 1033 | 10.4 | 109 | 86926 | Comparative example |
| 25 | N | 1029 | 0.84 | 1228 | 12.2 | 122 | 97996 | Inventive example |
| 26 | O | 1032 | 0.83 | 1246 | 12.6 | 132 | 105375 | Inventive example |
| 27 | P | 1028 | 0.82 | 1257 | 12.1 | 126 | 100763 | Inventive example |

(continued)

| No. | Steel grade | Tensile test | | | | VDA bending test | | Notes |
|---|---|---|---|---|---|---|---|---|
| | | YS | YR | TS | EI | α | AE | |
| | | (MPa) | (-) | (MPa) | (%) | (degree) | (N·mm) | |
| 28 | Q | 1027 | 0.82 | 1254 | 12.9 | 101 | 80469 | Inventive example |
| 29 | R | 1004 | 0.82 | 1228 | 12.8 | 132 | 105375 | Inventive example |
| 30 | S | 1078 | 0.83 | 1297 | 12.6 | 101 | 80469 | Inventive example |

[Table 4-2]

| No. | Steel grade | Tensile test | | | | VDA bending test | | Notes |
|---|---|---|---|---|---|---|---|---|
| | | YS | YR | TS | EI | α | AE | |
| | | (MPa) | (-) | (MPa) | (%) | (degree) | (N·mm) | |
| 31 | T | 1173 | 0.86 | 1366 | 12.5 | 117 | 93383 | Inventive example |
| 32 | U | 1044 | 0.86 | 1219 | 12.5 | 122 | 97996 | Inventive example |
| 33 | V | 1064 | 0.83 | 1286 | 12.7 | 120 | 96151 | Inventive example |
| 34 | W | 1099 | 0.85 | 1297 | 12.8 | 112 | 89693 | Inventive example |
| 35 | X | 1129 | 0.86 | 1311 | 12.5 | 96 | 76779 | Inventive example |
| 36 | Y | 1085 | 0.83 | 1300 | 12.4 | 124 | 98918 | Inventive example |
| 37 | Z | 972 | 0.81 | 1201 | 12.3 | 104 | 83236 | Inventive example |
| 38 | AA | 1019 | 0.83 | 1233 | 12.3 | 94 | 74934 | Inventive example |
| 39 | AB | 937 | 0.76 | 1236 | 12.6 | 127 | 101685 | Inventive example |
| 40 | AC | 1043 | 0.83 | 1256 | 12.7 | 126 | 100763 | Inventive example |
| 41 | AD | 1033 | 0.84 | 1237 | 12.4 | 94 | 74934 | Inventive example |
| 42 | AE | 1015 | 0.81 | 1251 | 12.8 | 127 | 101685 | Inventive example |
| 43 | AF | 992 | 0.80 | 1239 | 12.7 | 105 | 84159 | Inventive example |
| 44 | AG | 995 | 0.82 | 1216 | 12.7 | 127 | 101685 | Inventive example |
| 45 | AH | 1077 | 0.85 | 1270 | 12.6 | 122 | 97996 | Inventive example |
| 46 | AI | 1086 | 0.86 | 1268 | 12.5 | 109 | 86926 | Inventive example |
| 47 | AJ | 1051 | 0.82 | 1283 | 12.5 | 127 | 101685 | Inventive example |
| 48 | AK | 1001 | 0.81 | 1232 | 12.0 | 111 | 88771 | Inventive example |
| 49 | AL | 973 | 0.81 | 1200 | 12.7 | 95 | 75857 | Inventive example |
| 50 | AM | 1035 | 0.82 | 1256 | 12.2 | 119 | 95228 | Inventive example |
| 51 | AN | 939 | 0.76 | 1229 | 11.9 | 109 | 86926 | Inventive example |
| 52 | AO | 1079 | 0.85 | 1269 | 12.5 | 116 | 92461 | Inventive example |
| 53 | AP | 1058 | 0.84 | 1260 | 12.4 | 99 | 79547 | Inventive example |
| 54 | AQ | 1046 | 0.83 | 1261 | 12.8 | 125 | 99840 | Inventive example |
| 55 | AR | 1103 | 0.84 | 1310 | 12.2 | 125 | 99840 | Inventive example |
| 56 | Q | 1037 | 0.82 | 1261 | 12.0 | 128 | 102608 | Inventive example |
| 57 | Q | 1031 | 0.82 | 1257 | 12.3 | 118 | 94306 | Inventive example |
| 58 | Q | 1018 | 0.82 | 1247 | 13.7 | 114 | 91538 | Inventive example |
| 59 | Q | 1038 | 0.82 | 1262 | 13.7 | 106 | 85081 | Inventive example |

(continued)

| No. | Steel grade | Tensile test | | | | VDA bending test | | Notes |
|---|---|---|---|---|---|---|---|---|
| | | YS | YR | TS | El | α | AE | |
| | | (MPa) | (-) | (MPa) | (%) | (degree) | (N·mm) | |
| 60 | Q | 1041 | 0.82 | 1264 | 12.2 | 96 | 76779 | Inventive example |
| 61 | Q | 1023 | 0.82 | 1251 | 12.5 | <u>76</u> | <u>68477</u> | Comparative example |
| 62 | AS | 1009 | 0.84 | 1201 | 13.2 | 95 | 94723 | Inventive example |
| <u>63</u> | C | <u>740</u> | <u>0.63</u> | <u>1174</u> | 12.6 | 105 | 87394 | Comparative example |
| <u>64</u> | A | 1126 | 0.86 | 1314 | <u>9.1</u> | <u>72</u> | <u>68814</u> | Comparative example |
| 65 | A | 939 | 0.77 | 1220 | 13.4 | 84 | 74270 | Inventive example |
| 66 | A | 967 | 0.76 | 1273 | 15.1 | 91 | 92154 | Inventive example |
| 67 | A | 929 | 0.77 | 1207 | 12.2 | 97 | 87670 | Inventive example |

In Tables 1 to 4, the underlined portions indicate values outside the appropriate ranges of the present invention.

As shown in Table 4, all of the inventive examples were acceptable in all of the tensile strength (TS), the yield stress (YS), the yield ratio (YR), the total elongation (El), the critical bending angle ($\alpha$) in the VDA bending test, and the integral value (absorbed energy) (AE) of the load-stroke curve in the VDA bending test. The production efficiency (E) was also good.

On the other hand, the comparative examples failed in at least one of the tensile strength (TS), the yield stress (YS), the yield ratio (YR), the total elongation (El), the critical bending angle ($\alpha$) in the VDA bending test, and the integral value (absorbed energy) AE) of the load-stroke curve in the VDA bending test.

The members produced by forming or joining the steel sheets according to the examples of the present invention had good characteristics characterized by the present invention in all of the tensile strength (TS), the yield stress (YS), the yield ratio (YR), the total elongation (El), the critical bending angle ($\alpha$) in the VDA bending test, and the integral value (absorbed energy) (AE) of the load-stroke curve in the VDA bending test. It was also found that the production efficiency (E) was good. Reference Signs List

F        ferrite

BF       bainitic ferrite

TM       tempered martensite

H        hard second phase

$L_{F-MA}$ length of grain boundary in contact with fresh martensite and/or retained austenite on ferrite grain boundary

**Claims**

1. A steel sheet comprising a base steel sheet, wherein the base steel sheet has a chemical composition containing, on a mass percent basis,

C: 0.050% or more and 0.400% or less,
Si: 0.20% or more and 3.00% or less,
Mn: 1.00% or more and less than 3.50%,
P: 0.001% or more and 0.100% or less,
S: 0.0001% or more and 0.0200% or less,
Al: 0.010% or more and 2.000% or less, and
N: 0.0100% or less,
with the remainder being Fe and incidental impurities, and
has a steel microstructure, as a microstructure at a quarter thickness position of the base steel sheet, in which
an area fraction of ferrite: less than 20.0% (including 0.0%),
an area fraction of retained austenite: 3.0% or more and 15.0% or less,
an area fraction of fresh martensite: 10.0% or less (including 0.0%),

a total area fraction of bainitic ferrite and tempered martensite: 45.0% or more and 90.0% or less, and

a grain boundary length $L_{F-MA}$ in contact with fresh martensite and/or retained austenite on a ferrite grain boundary and a grain boundary length $L_F$ of ferrite satisfy $L_{F-MA}/L_F$: 0.70 or less,

the steel sheet has a surface soft layer formed from a surface of the base steel sheet to a depth of 20 μm or more in a thickness direction, wherein for the steel microstructure, a total area fraction of a non-ferrite microstructure in the surface soft layer is 1/2 or less of that at the quarter thickness position, and

the steel sheet has a tensile strength of 1180 MPa or more and less than 1470 MPa.

2. The steel sheet according to Claim 1, wherein the chemical composition further contains, on a mass percent basis,

at least one selected from
Nb: 0.200% or less,
Ti: 0.200% or less,
V: 0.200% or less,
B: 0.0100% or less,
Cr: 1.000% or less,
Ni: 1.000% or less,
Mo: 1.000% or less,
Sb: 0.200% or less,
Sn: 0.200% or less,
Cu: 1.000% or less,
Ta: 0.100% or less,
W: 0.500% or less,
Mg: 0.0200% or less,
Zn: 0.0200% or less,
Co: 0.0200% or less,
Zr: 0.1000% or less,
Ca: 0.0200% or less,
Se: 0.0200% or less,
Te: 0.0200% or less,
Ge: 0.0200% or less,
As: 0.0500% or less,
Sr: 0.0200% or less,
Cs: 0.0200% or less,
Hf: 0.0200% or less,
Pb: 0.0200% or less,
Bi: 0.0200% or less, and
REM: 0.0200% or less.

3. The steel sheet according to Claim 1 or 2, comprising a galvanized layer on one or both surfaces of the base steel sheet.

4. A member produced by using the steel sheet according to any one of Claims 1 to 3.

5. A method for producing a steel sheet, the method comprising:

a hot rolling step of hot-rolling a steel slab with the chemical composition according to Claim 1 or 2 to form a hot-rolled steel sheet;

a pickling step of pickling the hot-rolled steel sheet;

an annealing step of heating the steel sheet after the pickling step and annealing the steel sheet under conditions of an annealing temperature of 720°C or more and 860°C or less, a holding time of 20 seconds or more, and an atmosphere with a dew-point temperature of -10°C or more;

a rapid heating step of rapidly heating the steel sheet from the annealing temperature to the annealing temperature + 10°C or more at a heating rate of 10°C/s or more;

a cooling step of cooling the steel sheet after the rapid heating step to a cooling stop temperature of 100°C or more and 300°C or less; and

a reheating and holding step of heating the steel sheet after the cooling step to a tempering temperature of 460°C or less and holding the steel sheet in the temperature range for a tempering time of 10 seconds or more and 2000 seconds or less,
or further comprising
a cold rolling step of cold-rolling the steel sheet after the pickling step and before the annealing step at a rolling reduction of 20% or more and 80% or less to form a cold-rolled steel sheet.

6. The method for producing a steel sheet according to Claim 5, wherein a line speed LS (m/min) of the steel sheet in the annealing step satisfies the following formula (1):

$$3.0/(t \times W \times 4.716 \times 10^{-4}) < LS < 390.0/(t \times W \times 4.716 \times 10^{-4}) \qquad \text{formula (1)}$$

wherein

t denotes a sheet thickness (mm) after the pickling step and before the annealing step, and
W denotes a sheet width (mm) after the pickling step and before the annealing step.

7. The method for producing a steel sheet according to Claim 5 or 6, the method comprising, during the cooling step, after the cooling step and before the reheating and holding step, or after the reheating and holding step, a hot-dip galvanizing step of immersing the steel sheet in a hot-dip galvanizing bath to form a galvanized layer on the steel sheet,
or further comprising an alloying treatment step of performing an alloying treatment on the steel sheet on which the galvanized layer is formed.

8. The method for producing a steel sheet according to Claim 5 or 6, the method comprising, after the reheating and holding step, an electrogalvanizing step of immersing the steel sheet in an electrogalvanizing bath to form a galvanized layer on the steel sheet.

9. A method for producing a member, the method comprising a step of subjecting the steel sheet according to any one of Claims 1 to 3 to at least one of forming or joining to produce a member.

# FIG. 1

(a)

(b)

## INTERNATIONAL SEARCH REPORT

| International application No. |
| --- |
| **PCT/JP2024/006906** |

### A. CLASSIFICATION OF SUBJECT MATTER

*C22C 38/00*(2006.01)i; *C21D 9/46*(2006.01)i; *C21D 9/56*(2006.01)i; *C22C 38/06*(2006.01)i; *C22C 38/60*(2006.01)i
FI:  C22C38/00 301S; C21D9/46 G; C21D9/46 J; C21D9/46 T; C21D9/46 U; C21D9/56 101E; C22C38/00 301T; C22C38/00 301W; C22C38/06; C22C38/60

According to International Patent Classification (IPC) or to both national classification and IPC

### B. FIELDS SEARCHED

Minimum documentation searched (classification system followed by classification symbols)

C22C38/00-38/60; C21D9/46-9/48; C21D9/56

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2013-163827 A (NIPPON STEEL & SUMITOMO METAL CORPORATION) 22 August 2013 (2013-08-22)<br>claims 1-10, paragraphs [0002], [0054]-[0059], tables 1-3-3 | 1-4 |
| A | | 5-9 |
| A | WO 2021/200580 A1 (JFE STEEL CORPORATION) 07 October 2021 (2021-10-07)<br>claims, examples | 1-9 |
| A | WO 2021/200578 A1 (JFE STEEL CORPORATION) 07 October 2021 (2021-10-07)<br>claims, examples | 1-9 |
| A | WO 2023/032424 A1 (JFE STEEL CORPORATION) 09 March 2023 (2023-03-09)<br>claims, examples | 1-9 |
| A | JP 2014-173151 A (NIPPON STEEL & SUMITOMO METAL CORPORATION) 22 September 2014 (2014-09-22)<br>claims | 1-9 |

☐ Further documents are listed in the continuation of Box C.  ☑ See patent family annex.

| | |
| --- | --- |
| \* Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **22 April 2024** | **07 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/006906**

| Patent document cited in search report | | | Publication date (day/month/year) | Patent family member(s) | | | Publication date (day/month/year) |
|---|---|---|---|---|---|---|---|
| JP | 2013-163827 | A | 22 August 2013 | (Family: none) | | | |
| WO | 2021/200580 | A1 | 07 October 2021 | EP | 4130324 | A1 | |
| | | | | claims, examples | | | |
| | | | | CN | 115362279 | A | |
| | | | | KR 10-2022-0145391 | | A | |
| | | | | MX | 2022012144 | A | |
| | | | | US | 2023/0151451 | A1 | |
| WO | 2021/200578 | A1 | 07 October 2021 | EP | 4130325 | A1 | |
| | | | | claims, examples | | | |
| | | | | CN | 115362277 | A | |
| | | | | KR 10-2022-0144405 | | A | |
| | | | | MX | 2022012142 | A | |
| | | | | US | 2023/0127243 | A1 | |
| WO | 2023/032424 | A1 | 09 March 2023 | CN | 117881811 | A | |
| | | | | KR 10-2024-0035537 | | A | |
| JP | 2014-173151 | A | 22 September 2014 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5256689 B
- JP 5354135 B
- JP 5352793 B